(19) Europäisches Patentamt European Patent Office Office européen des brevets

(11) **EP 4 559 538 A1**

(12) **EUROPEAN PATENT APPLICATION**

(43) Date of publication:
**28.05.2025 Bulletin 2025/22**

(21) Application number: **24212006.1**

(22) Date of filing: **11.11.2024**

(51) International Patent Classification (IPC):
*A63B 53/04* (2015.01)    *A63B 60/00* (2015.01)
*B32B 27/40* (2006.01)    *B32B 37/00* (2006.01)
*C23C 18/16* (2006.01)    *C25D 7/00* (2006.01)

(52) Cooperative Patent Classification (CPC):
**A63B 53/0408; A63B 53/0445; A63B 53/0466;**
**A63B 60/004; B32B 27/40; B32B 37/00;**
**C23C 18/165; C25D 7/00;** A63B 2209/00

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **27.11.2023 JP 2023200259**

(71) Applicant: **Sumitomo Rubber Industries, Ltd.**
**Kobe-shi, Hyogo 651-0072 (JP)**

(72) Inventors:
• **MIZUTANI, Naruhiro**
  **Kobe-shi, 651-0072 (JP)**

• **NAKAMURA, Hirotaka**
  **Kobe-shi, 651-0072 (JP)**
• **KOHNO, Daisuke**
  **Kobe-shi, 651-0072 (JP)**
• **MOTOKAWA, Yuki**
  **Kobe-shi, 651-0072 (JP)**
• **ENDO, Seiichiro**
  **Kobe-shi, 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **GOLF CLUB HEAD**

(57)    A golf club head includes a face portion including a striking face. The face portion includes a metal face portion made of a metal and a urethane layer member disposed outside the metal face portion and made of a polyurethane. A covered part, which is covered by the urethane layer member, of an outer surface of the metal face portion has a surface roughness of greater than 4.5 um when expressed by an arithmetic mean roughness Ra or has a surface roughness of greater than 25 um when expressed by a maximum peak-to-valley height Rz. In the golf club head, the surface roughness of the outer surface of the metal face portion may be greater than 4.5 um when expressed by the arithmetic mean roughness Ra and greater than 25 um when expressed by the maximum peak-to-valley height Rz.

EP 4 559 538 A1

**Description**

CROSS REFERENCE TO RELATED APPLICATION

The present application claims priority to Japanese Patent Application No. 2023-200259 filed on November 27, 2023. The entire contents of this Japanese Patent Application are hereby incorporated by reference.

BACKGROUND

Technical Field

The present disclosure relates to golf club heads.

Description of the Related Art

Various materials are used for a golf club head. There has also been known a composite club head in which two or more types of materials are used. Materials of a head can be adopted in accordance with performances required for the head.

JP4733336 B2 (US6,428,427 B1) discloses a golf club head including: a body made of a titanium alloy; a striking plate made of a titanium alloy and attached to the body; and a thin layer disposed on an exterior surface of the striking plate, having a thickness ranging from 0.127 mm to 2.540 mm, having a plurality of scorelines, and made of a thermosetting polyurethane.

SUMMARY

Rebound performance is known as one of basic performances required for a golf club head. A high rebound performance can increase ball flight distance. On the other hand, a high rebound performance tends to cause an excessively early ball release from the club head, and is likely to bring about deterioration in ball sticking feeling. The ball release from a club head means a feeling in which a ball which has been brought into contact with the striking face of the club head at impact goes away from the striking face. The ball sticking feeling is a feeling in which a ball does not slide on the striking face at impact and is sticking on the striking face. It was difficult to achieve both a high rebound performance and a sufficient ball sticking feeing.

One of the objects of the present disclosure is to provide a golf club head that can achieve both a high rebound performance and a sufficient ball sticking feeling.

In one aspect, a golf club head of the present disclosure includes a face portion that includes a striking face. In this head, the face portion includes a metal face portion made of a metal, and a urethane layer member disposed outside the metal face portion and made of a polyurethane. A covered part, which is covered by the urethane layer member, of an outer surface of the metal face portion has a surface roughness of greater than 4.5 um when expressed by an arithmetic mean roughness Ra or has a surface roughness of greater than 25 um when expressed by a maximum peak-to-valley height Rz.

BRIEF DESCRIPTION OF THE DRAWINGS

FIG. 1 is a plan view of a golf club head according to a first embodiment;
FIG. 2 is a bottom view of the golf club head in FIG. 1;
FIG. 3A is a front view of the golf club head in FIG. 1, and FIG. 3B shows a part of a cross-sectional contour line of the outer surface of the golf club head in a cross section taken along line E1 in FIG. 3A;
FIG. 4 is a perspective view of the golf club head in FIG. 1;
FIG. 5 is an exploded perspective view of the golf club head in FIG. 1;
FIG. 6 is a cross-sectional view taken along line A-A in FIG. 3A;
FIG. 7 is a partially enlarged view of FIG. 6;
FIG. 8 is a plan view of a golf club head according to a second embodiment;
FIG. 9 is a bottom view of the golf club head in FIG. 8;
FIG. 10 is a front view of the golf club head in FIG. 8;
FIG. 11 is a front view of a head body of the golf club head in FIG. 8;
FIG. 12 is a perspective view of the golf club head in FIG. 8;
FIG. 13 is a perspective view of the head body of the golf club head in FIG. 8;

FIG. 14 is an exploded perspective view of the golf club head in FIG. 8;

FIG. 15 is a cross-sectional view taken along line A-A in FIG. 10;

FIG. 16 is a partially enlarged view of FIG. 15;

FIG. 17 is a plan view of a golf club head according to a third embodiment;

FIG. 18 is a bottom view of the golf club head in FIG. 17;

FIG. 19 is a front view of the golf club head in FIG. 17;

FIG. 20 is a front view of a head body of the golf club head in FIG. 17;

FIG. 21 is a perspective view of the golf club head in FIG. 17;

FIG. 22 is a perspective view of the head body of the golf club head in FIG. 17;

FIG. 23 is an exploded perspective view of the golf club head in FIG. 17;

FIG. 24 is a cross-sectional view taken along line A-A in FIG. 19;

FIG. 25 is a partially enlarged view of FIG. 24;

FIG. 26A is a front view of a head body of a modification example, FIG. 26B is a front view of a head body of another modification example, FIG. 26C is a front view of a head body of still another modification example, FIG. 26D is a front view of a head body of still another modification example, and FIG. 26E is a front view of a head body of still another modification example;

FIG. 27A is a part of a cross-sectional view of a golf club head of still another modification example, FIG. 27B is a part of a cross-sectional view of a golf club head of still another modification example, and FIG. 27C is a part of a cross-sectional view of a golf club head of still another modification example; and

FIG. 28 is a conceptual diagram for illustrating a reference state.

## DESCRIPTION OF THE PREFERRED EMBODIMENTS

Hereinafter, the present disclosure will be described in detail according to preferred embodiments with appropriate references to the accompanying drawings.

In the present disclosure, a reference state, a reference perpendicular plane, a toe-heel direction, a face-back direction, an up-down direction, a face center, a vertical cross section, a horizontal cross section, and a front elevation view are defined as follows.

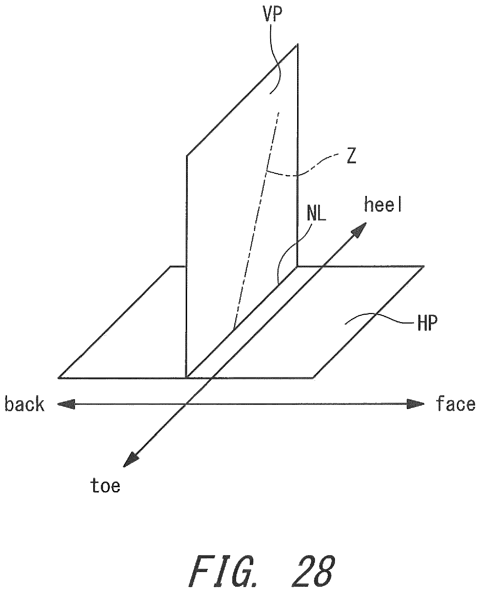

The reference state is a state where a head is placed at a predetermined lie angle on a ground plane HP. As shown in FIG. 28, in the reference state, a shaft axis line Z lies on (is contained in) a plane VP that is perpendicular to the ground plane HP. The shaft axis line Z is the center line of a shaft. The shaft axis line Z normally coincides with the center line of a hosel hole. The plane VP is referred to as the reference perpendicular plane. The predetermined lie angle is shown in a product catalog, for example.

There has been known a club in which its loft angle, lie angle and face angle can be adjusted by, for example, changing a rotational position of a sleeve provided at a tip portion of a shaft. In such a club, the sleeve can be detachably fixed to the head with a fixing means such as a screw. For this reason, in this club, the shaft is attachable to/detachable from the head. In a club having such an attachable/detachable mechanism, all adjustable items are set to be neutral when the club is in the reference state. The term "neutral" means the center of the range of adjustment. A golf club having a head according to the present disclosure may include such an attachable/detachable mechanism.

In the reference state, a face angle is 0°. That is, in a planar view of a head as viewed from above, a line normal to its striking face at the face center is set to be perpendicular to the toe-heel direction. The definitions of the face center and the toe-heel direction are as explained below.

In the present disclosure, the toe-heel direction is the direction of an intersection line NL between the reference perpendicular plane VP and the ground plane HP (see FIG. 28). A toe side in the toe-heel direction is also simply referred to as "toe side". A heel side in the toe-heel direction is also simply referred to as "heel side".

In the present disclosure, the face-back direction is a direction that is perpendicular to the toe-heel direction and is parallel to the ground plane HP. A face side in the face-back direction is also simply referred to as "face side". A back side in the face-back direction is also simply referred to as "back side".

In the present disclosure, the up-down direction is a direction that is perpendicular to the toe-heel direction and is perpendicular to the face-back direction. In other words, the up-down direction in the present disclosure is a direction perpendicular to the ground plane HP. An upper side in the up-down direction is also referred to as "upper side" or "crown side". A lower side in the up-down direction is also referred to as "lower side" or "sole side".

In the present disclosure, the face center is determined in the following manner. First, a point Pr is selected roughly at the center of a striking face in the up-down direction and the toe-heel direction. Next, a plane that passes through the point Pr, extends in the direction of a line normal to the striking face at the point Pr, and is parallel to the toe-heel direction is determined. An intersection line between this plane and the striking face is drawn, and a midpoint Px of this intersection line is determined. Next, a plane that passes through the midpoint Px, extends in the direction of a line normal to the striking face at the midpoint Px, and is parallel to the up-down direction is determined. An intersection line between this plane and the striking face is drawn, and a midpoint Py of this intersection line is determined. Next, a plane that passes through the midpoint Py, extends in the direction of a line normal to the striking face at the midpoint Py, and is parallel to the toe-heel direction is determined. An intersection line between this plane and the striking face is drawn, and a midpoint Px of this intersection line is newly determined. Next, a plane that passes through this newly-determined midpoint Px, extends in the direction of a line normal to the striking face at this midpoint Px, and is parallel to the up-down direction is determined. An intersection line between this plane and the striking face is drawn, and a midpoint Py of this intersection line is newly determined. By repeating the above-described steps, points Px and Py are sequentially determined. In the course of repeating these steps, when the distance between a newly-determined midpoint Py and a midpoint Py determined in the immediately preceding step first becomes less than or equal to 0.5 mm, the newly-determined midpoint Py (the midpoint Py determined last) is defined as the face center.

In the present disclosure, the vertical cross section is defined as each of cross sections taken along respective flat planes perpendicular to the toe-heel direction. In the present disclosure, the horizontal cross section is defined as each of cross sections taken along respective flat planes perpendicular to the up-down direction. In other words, the horizontal cross section in the present disclosure is defined as each of cross sections taken along respective flat planes parallel to the ground plane HP.

In the present disclosure, the front elevation view means an orthogonal projection of a head obtained by projecting the head in a projecting direction that is a direction of a line normal to the striking face at the face center. Unless otherwise described, shapes, areas, dimensions, and the like of respective regions/parts/areas of a face portion are determined in the front elevation view. A drawing prepared as the front elevation view is also simply referred to as a front view in the present disclosure.

Note that the plan view of a head is a projected figure obtained by projecting the head which is in the reference state onto a plane parallel to the ground plane HP. In the present disclosure, the plan view of a head is also referred to as a planar view.

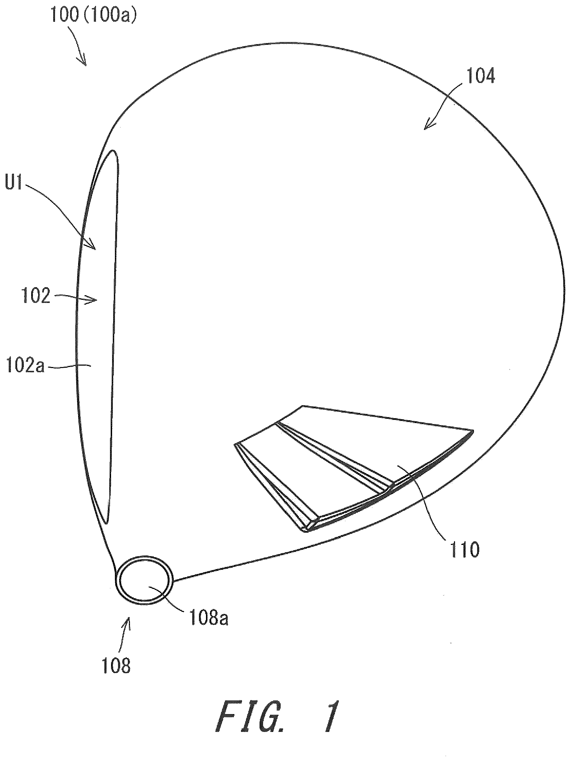

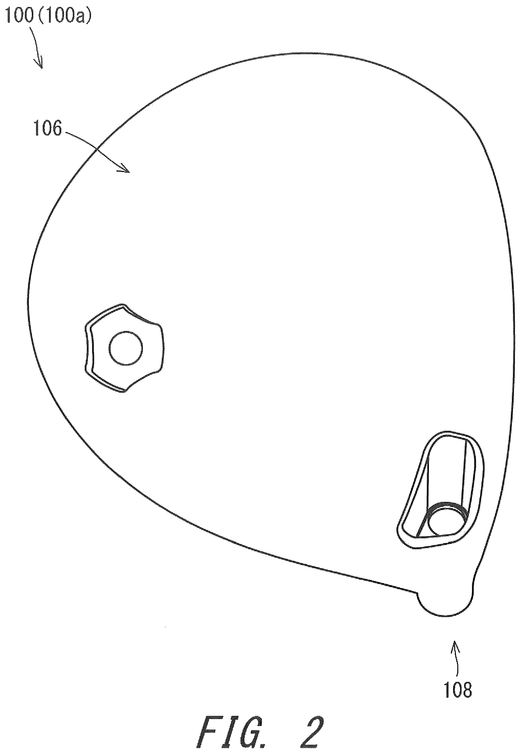

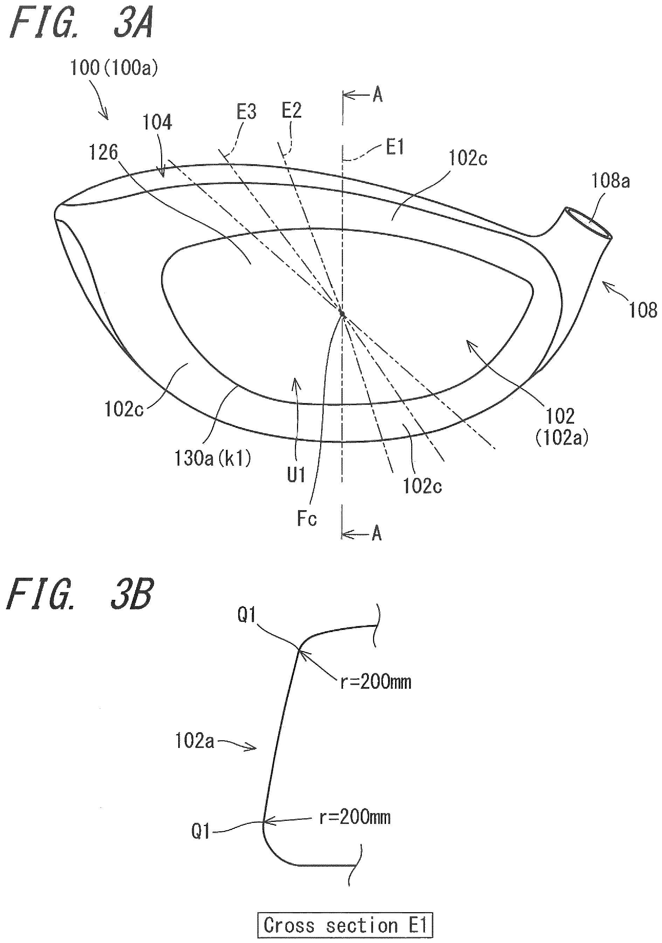

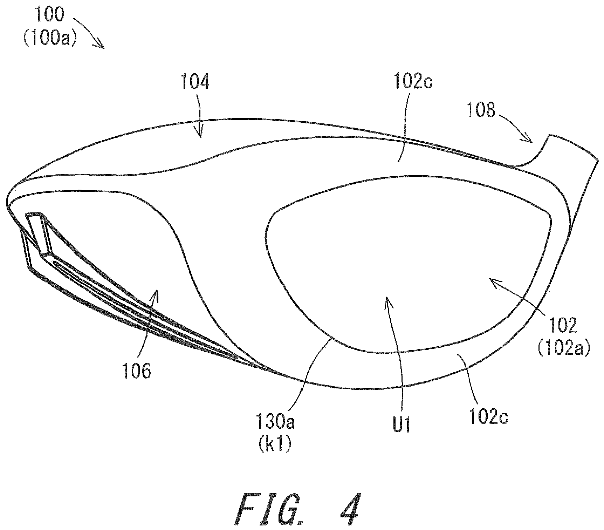

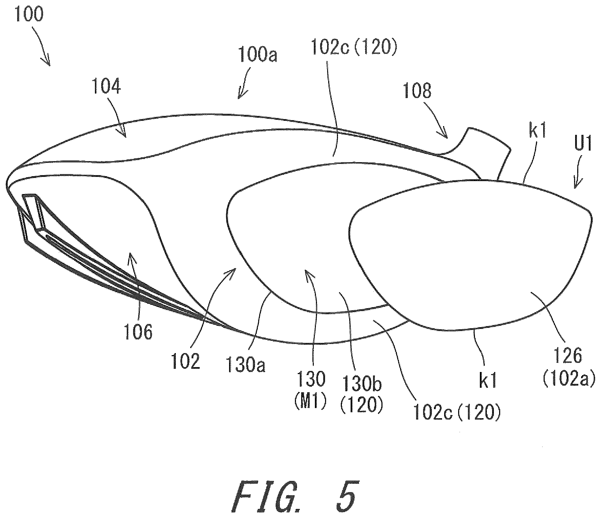

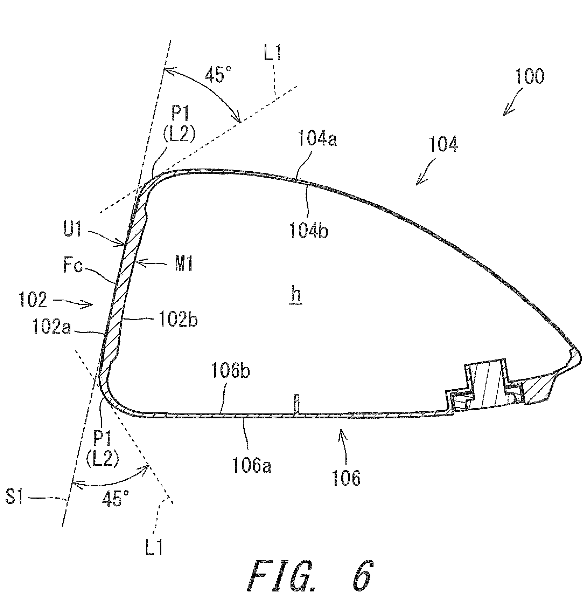

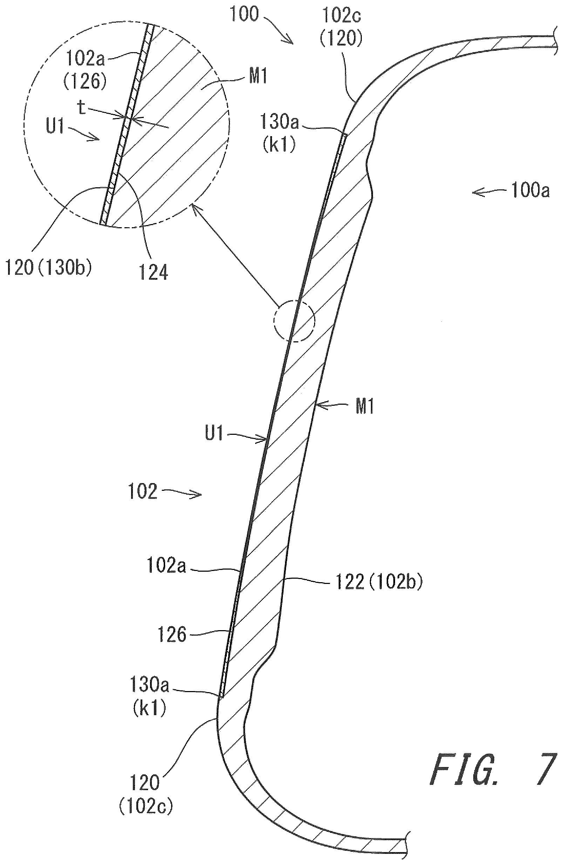

FIG. 1 is a plan view of a golf club head 100 according to a first embodiment. FIG. 2 is a bottom view of the head 100. FIG. 3A is a front view of the head 100. FIG. 3B shows a cross-sectional contour line of the outer surface of the head 100 in a cross section E1 taken along line E1 in FIG. 3A. FIG. 4 is a perspective view of the head 100. FIG. 5 is an exploded perspective view of the head 100. FIG. 6 is a cross section taken along line A-A in FIG. 3A. FIG. 7 is a partially enlarged view of FIG. 6.

As shown in FIG. 1 to FIG. 7, the head 100 includes a face portion 102, a crown portion 104, a sole portion 106, and a hosel portion 108.

The head 100 may be a wood type head. The head 100 may be a hybrid type head. The head 100 may be an iron type head. The head 100 may be a putter type head. In the present embodiment, the head 100 is a wood type head. The head 100 is a driver head. As shown in FIG. 6, the head 100 has a hollow structure. The head 100 has a hollow interior h.

As shown in FIG. 6, the face portion 102 includes a striking face 102a and a face inner surface 102b. The striking face 102a is brought into contact with a golf ball at impact between the head 100 and the golf ball. The striking face 102a is the outer surface of the face portion 102. The striking face 102a is also simply referred to as a face. The face inner surface 102b is the inner surface of the face portion 102. The face inner surface 102b faces the hollow interior h.

The crown portion 104 constitutes the upper surface of the head 100. The crown portion 104 includes a crown outer surface 104a and a crown inner surface 104b. The crown inner surface 104b faces the hollow interior h.

The sole portion 106 constitutes the lower surface of the head 100. The sole portion 106 includes a sole outer surface 106a and a sole inner surface 106b. The sole inner surface 106b faces the hollow interior h.

The hosel portion 108 is disposed on a heel-side part of the head 100. The hosel portion 108 has a hosel hole 108a. A shaft (not shown in the drawings) can be inserted into the hosel hole 108a. Alternatively, a sleeve (not shown in the drawings) attached to the tip portion of the shaft can be inserted into the hosel hole 108a.

As shown in FIG. 3A, the striking face 102a includes a face center Fc as defined above.

A peripheral edge of the striking face 102a can be defined as follows. As shown in FIG. 3A, there are a large number of flat planes each of which contains a line normal to the striking face 102a at the face center Fc, for example, flat planes E1, E2, and E3 in FIG. 3A. FIG. 3B shows a cross-sectional contour line of the head outer surface in a cross section taken along the flat plane E1. In each cross section taken along the flat planes such as the flat plane E1, when a curvature radius r of the cross-sectional contour line of the head outer surface is sequentially observed from the face center Fc toward the outside of the striking face 102a, a point at which the curvature radius r becomes 200 mm for the first time is defined as a point Q1. A set of the points Q1 can be the peripheral edge of the striking face 102a.

As shown in FIG. 1, the crown portion 104 includes a crown protrusion 110. The crown protrusion 110 is a protrusion formed on the crown outer surface 104a. Although not shown in the drawings, the crown protrusion 110 is a hollow protrusion. Although not shown in the drawings, a recess is formed on the inner surface of the crown protrusion 110. The crown protrusion 110 can influence performances of the head 100. For example, the crown protrusion 110 can affect aerodynamic properties of the head 100.

In a region in the toe-heel direction in which an impact area is present (hereinafter, this region is also referred to as the toe-heel directional region of the impact area), a 45-degree boundary line L2 can be set on the crown side and on the sole side of the head 100. As shown in FIG. 6, a flat plane that is in contact with the striking face 102a at the face center Fc is defined as a reference plane S1. In a vertical cross section, contact points P1 between the head outer surface and straight lines L1 having an angle of 45 degrees with respect to the reference plane S1 are determined. The contact points P1 can be peripheral edge points of the impact area in the vertical cross section. Vertical cross sections can be taken at any positions in the toe-heel direction, and the contact point(s) P1 can be determined in each of the vertical cross sections. A set of these contact points P1 is defined as the 45-degree boundary line L2. The impact area means a band-shaped region having its center line that passes through the face center Fc and extends in the up-down direction, and having a toe-heel directional width of 1.68 inches (42.67 mm). The impact area is determined in the front elevation view.

As shown in FIG. 7, the head 100 includes a urethane layer member U1. The urethane layer member U1 is provided as a constituent member of the face portion 102. The head 100 is constituted by a head body 100a and the urethane layer member U1. The head body 100a is made of a metal (titanium alloy). There is no limitation on the material of the head body 100a. The head body 100a may be made of a plurality of materials. The head body 100a may be constituted by a plurality of members.

As shown in FIG. 7, the face portion 102 includes a metal face portion M1 made of a metal, and the urethane layer member U1 disposed outside the metal face portion M1. The urethane layer member U1 is made of a polyurethane.

The metal face portion M1 includes an outer surface 120 and an inner surface 122. The metal face portion M1 is a part of the head body 100a. The inner surface 122 of the metal face portion M1 faces the hollow interior h. The inner surface 122 constitutes the face inner surface 102b. The urethane layer member U1 is disposed on the outer surface 120 of the metal face portion M1. The inner surface 124 of the urethane layer member U1 is in contact with the outer surface 120. Another layer (other layers) may be interposed between the outer surface 120 and the urethane layer member U1. The outer surface 126 of the urethane layer member U1 is the striking face 102a. The metal face portion M1 supports the urethane layer member U1 from inside the head 100.

Note that the metal face portion M1 may be a layer member that is a separate member from the head body 100a. For example, the metal face portion M1 may be disposed between the urethane layer member U1 and the head body 100a. In this case, the head body 100a located inside the metal face portion M1 may be made of a metal material different from the material of the metal face portion M1, or may be made of a non-metal material (such as a carbon fiber reinforced plastic.)

The outer surface 120 of the metal face portion M1 includes a part that is covered by the urethane layer member U1 (hereinafter also referred to as a covered part) and a part exposed to the outside of the head 100 without being covered by the urethane layer member U1 (hereinafter also referred to as an exposed part). In the exposed part, the metal face portion M1 forms the striking face 102a. In the covered part which is covered by the urethane layer member U1, the metal face portion M1 does not form the striking face 102a, and the urethane layer member U1 forms the striking face 102a. Alternatively, the entirety of the outer surface 120 of the metal face portion M1 may be covered by the urethane layer member U1. The urethane layer member U1 may constitute the entirety of the striking face 102a.

The head body 100a has a recess 130 in which the urethane layer member U1 is received. The urethane layer member U1 is disposed in the recess 130. The recess 130 is formed on the outer surface 120 of the metal face portion M1. The recess 130 has a contour line 130a that coincides with a contour line k1 of the urethane layer member U1 (see FIG. 3A). The depth of the recess 130 is equivalent to the thickness of the urethane layer member U1. The depth of the recess 130 on the contour line 130a is equal to the thickness t of the urethane layer member U1 on the contour line k1. The recess 130 includes a bottom surface 130b that is formed by the metal face portion M1. The bottom surface 130b of the recess 130 is the outer surface 120 of the metal face portion M1. The bottom surface 130b of the recess 130 is covered by the urethane layer member U1. Because of the presence of the recess 130, the striking face 102a does not substantially include a step (hereinafter also referred to as a surface step) on the contour line k1 of the urethane layer member U1. When the contour line k1 is positioned on the striking face 102a, the surface step on the contour line k1 can have a height of less than or equal to 0.1 mm.

In the present embodiment, the entirety of the urethane layer member U1 is included in the face portion 102. The entirety of the urethane layer member U1 is disposed within the striking face 102a. The urethane layer member U1 constitutes a part of the striking face 102a. The striking face 102a includes a part formed by the urethane layer member U1, and a part formed by the metal face portion M1. The part formed by the metal face portion M1 constitutes a metal striking face 102c made of a metal. The urethane layer member U1 is surrounded by the metal striking face 102c. Alternatively, the urethane layer member U1 may form the entirety of the striking face 102a. The contour line k1 of the urethane layer member U1 may coincide with the contour line of the striking face 102a.

The covered part, which is covered by the urethane layer member U1, of the outer surface 120 of the metal face portion M1 has a surface roughness that satisfies the following (a) and/or (b). In the present embodiment, the bottom surface 130b of the recess 130 has a surface roughness that satisfies the following (a) and/or (b).

(a) The surface roughness is greater than 4.5 um when expressed by an arithmetic mean roughness Ra.
(b) The surface roughness is greater than 25 um when expressed by a maximum peak-to-valley height Rz.

The arithmetic mean roughness Ra and the maximum peak-to-valley height Rz are defined in JIS B 0601:2013, and measured in accordance with regulations in JIS B 0601:2013 and JIS B 0633:2001. These values can be measured with a contact or non-contact surface roughness measuring device. For example, these values can be measured using "Wide-Area 3D Measurement System Head VR-5200" manufactured by Keyence Corporation under the following measurement conditions. Note that when a plurality of measured values are obtained in the measured area, the maximum value can be adopted.

- Measurement conditions

Cut-off ($\lambda$c): 0.8 mm/2.5 mm/8 mm
Filter type: Gaussian filter
As: None
Setting of 3D measurement: high accuracy (roughness)

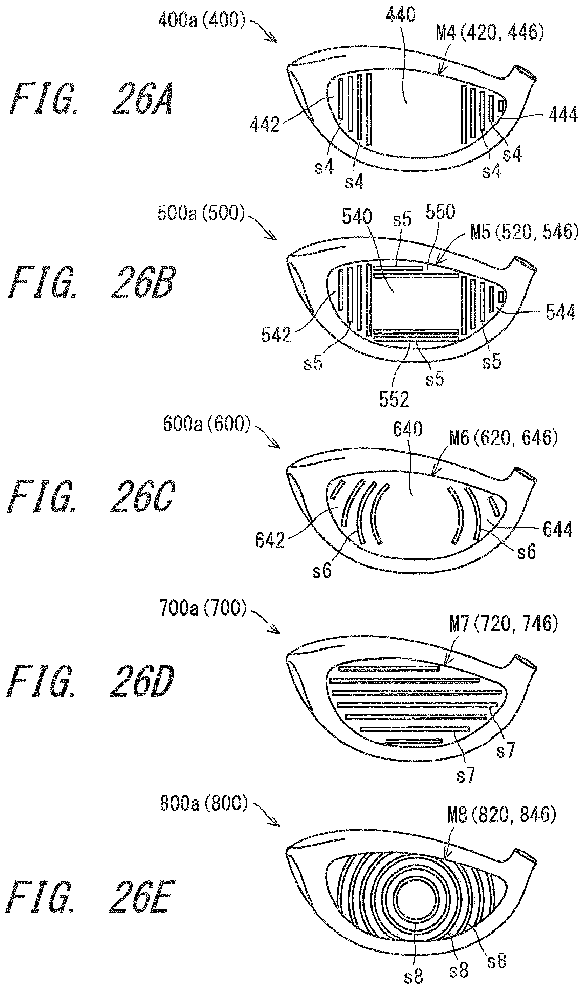

Note that the arithmetic mean roughness Ra and the maximum peak-to-valley height Rz are set in a part of the outer surface 120 of the metal face portion M1 which constitutes an interface between the metal face portion M1 and the urethane layer member U1. When the outer surface 120 of the metal face portion M1 includes metal grooves explained later with reference to FIG. 26A to FIG. 26E, the arithmetic mean roughness Ra and the maximum peak-to-valley height Rz are not set in portions on which the metal grooves are formed. The arithmetic mean roughness Ra and the maximum peak-to-valley height Rz are set in a part on which the metal grooves are not formed.

The covered part, which is covered by the urethane layer member U1, of the outer surface 120 of the metal face portion M1 satisfies the following (c) .

(c) Developed interfacial area ratio Sdr is greater than or equal to 0.12.

Note that the developed interfacial area ratio Sdr is set in a part of the outer surface 120 of the metal face portion M1 which constitutes the interface between the metal face portion M1 and the urethane layer member U1. When the outer surface 120 of the metal face portion M1 includes the metal grooves explained later, the developed interfacial area ratio Sdr is not set in the portions on which the metal grooves are formed.

The developed interfacial area ratio Sdr is defined by ISO 25178 and is measured in accordance with regulations in ISO 25178. The developed interfacial area ratio Sdr can be measured using a non-contact measuring device, for example. The developed interfacial area ratio Sdr can be measured, for example, using "Wide-Area 3D Measurement System Head VR-5200" manufactured by Keyence Corporation under the following measurement conditions. Note that when a plurality of measured values are obtained in the measured area, the maximum value can be adopted.

- Measurement conditions

Size: 10000 $\mu$m $\times$ 10000 um
Filter type: Gaussian filter
Other filter(s): None
End effect correction: ON

The covered part, which is covered by the urethane layer member U1, of the outer surface 120 of the metal face portion M1 may include minute protrusions and minute recesses which have a top-to-bottom height of less than or equal to 100 nm. This top-to-bottom height is measured from the top of a protrusion to the bottom of a recess that is adjacent to the protrusion. A primer and/or an adhesive is/are disposed between the metal face portion M1 and the urethane layer member U1.

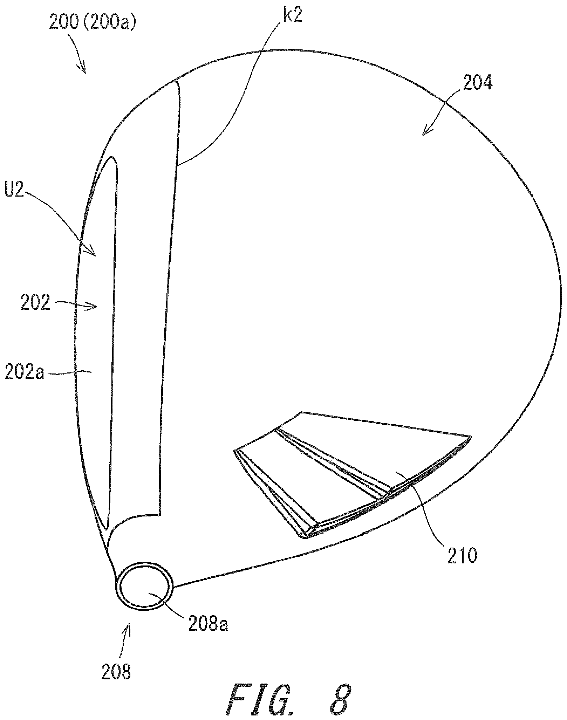

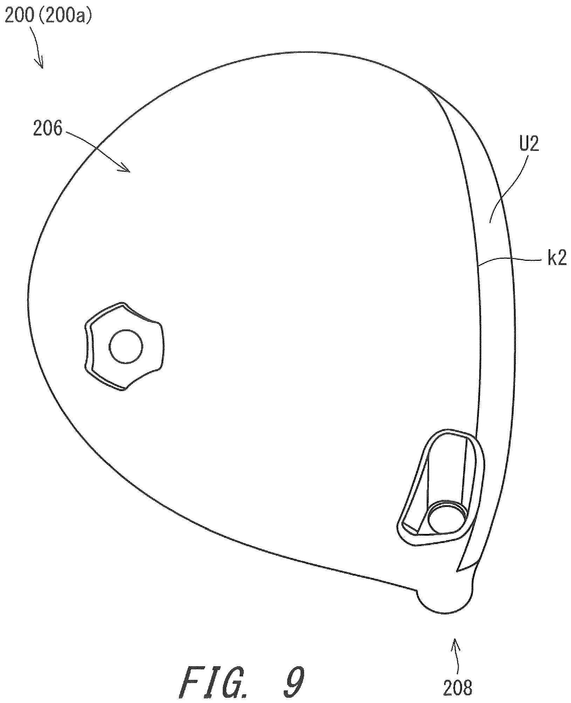

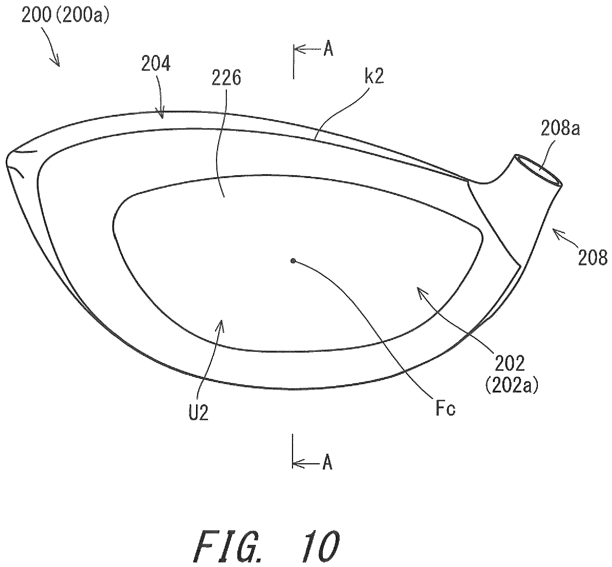

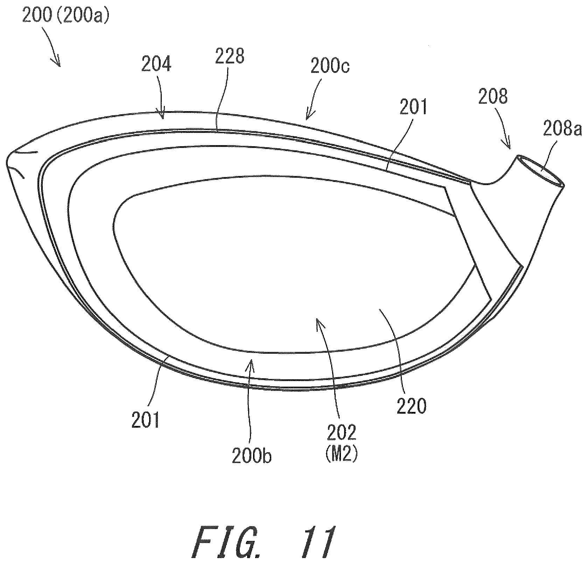

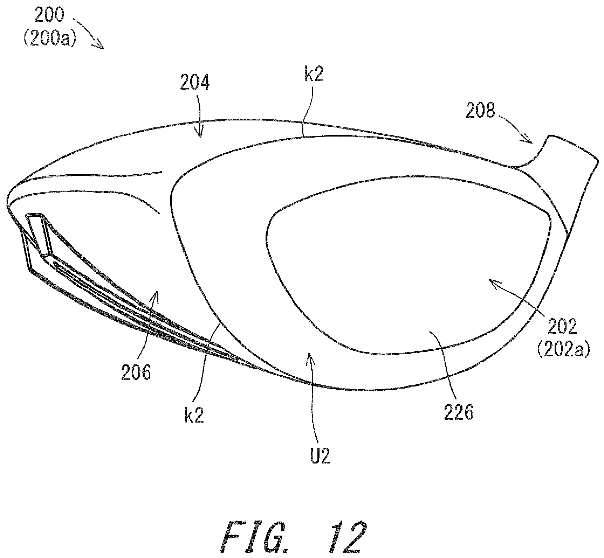

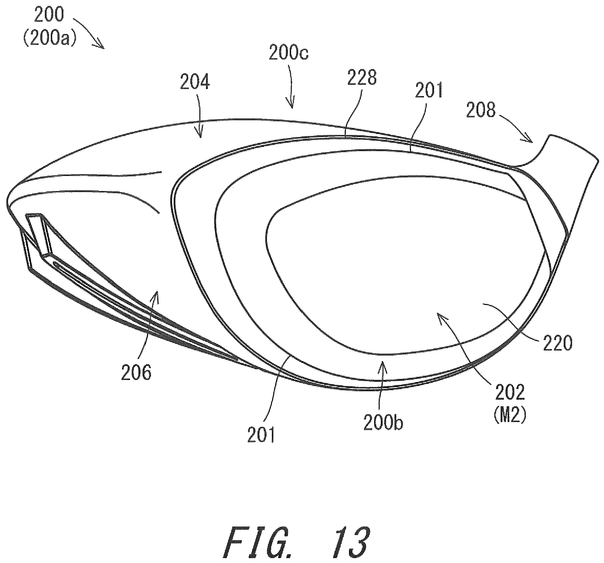

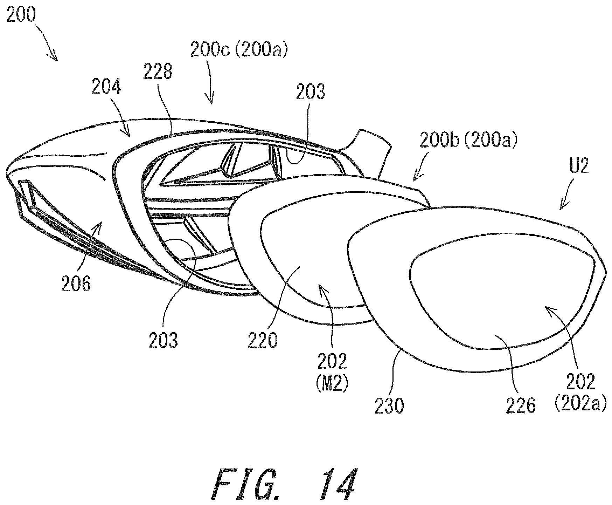

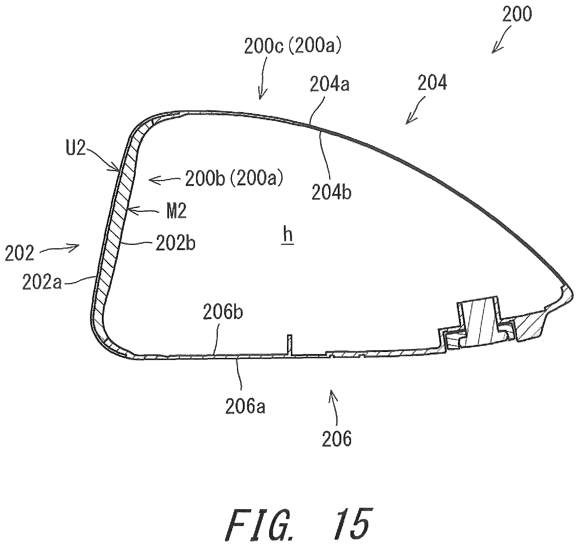

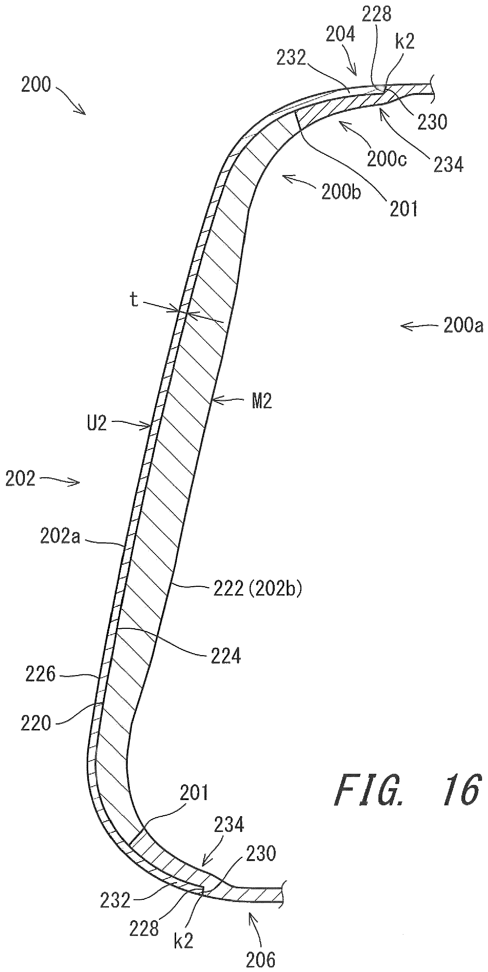

FIG. 8 shows a plan view of a golf club head 200 according to a second embodiment. FIG. 9 is a bottom view of the head 200. FIG. 10 is a front view of the head 200. FIG. 11 is a front view of the head 200 from which its urethane layer member U2 is removed. FIG. 12 is a perspective view of the head 200. FIG. 13 is a perspective view of the head 200 from which the urethane layer member U2 is removed. FIG. 14 is an exploded perspective view of the head 200. FIG. 15 is a cross-sectional view taken along line A-A in FIG. 10. FIG. 16 is a partially enlarged view of FIG. 15.

As shown in FIG. 8 to FIG. 16, the head 200 includes a face portion 202, a crown portion 204, a sole portion 206, and a hosel portion 208. The head 200 is a wood type head. As shown in FIG.15, the head 200 has a hollow structure. The head 200 has a hollow interior h.

As shown in FIG. 15, the face portion 202 includes a striking face 202a and a face inner surface 202b. The striking face 202a is a surface that is brought into contact with a golf ball at impact between the head 200 and the golf ball. The striking face 202a is the outer surface of the face portion 202. The face inner surface 202b is the inner surface of the face portion 202. The face inner surface 202b faces the hollow interior h. As shown in FIG. 10, the striking face 202a includes a face center Fc as defined above.

As shown in FIG. 15, the crown portion 204 constitutes the upper surface of the head 200. The crown portion 204 includes a crown outer surface 204a and a crown inner surface 204b. The crown inner surface 204b faces the hollow interior h. The crown portion 204 includes a crown protrusion 210. The sole portion 206 constitutes the lower surface of the head 200. The sole portion 206 includes a sole outer surface 206a and a sole inner surface 206b. The sole inner surface 206b faces the hollow interior h. The hosel portion 208 is disposed on a heel-side part of the head 200. The hosel portion 208 has a hosel hole 208a.

As shown in FIG. 14 and FIG. 16, the head 200 includes the urethane layer member U2. The urethane layer member U2 is provided as a constituent member of the face portion 202. The urethane layer member U2 constitutes the entirety of the striking face 202a. The urethane layer member U2 extends to the outside of the striking face 202a. The urethane layer member U2 extends to the back side of the 45-degree boundary line L2 (see FIG. 6).

The head 200 is constituted by a head body 200a and the urethane layer member U2. The head body 200a is made of a metal (titanium alloy). As shown in FIG. 14, the head body 200a is constituted by a plurality of members. The head body 200a is constituted by a face member 200b and a back member 200c. The back member 200c is joined on the back side of the face member 200b. The face member 200b includes a part that constitutes a part of the face portion 202. The back member 200c includes a part that constitutes the crown portion 204, and a part that constitutes the sole portion 206. The back member 200c has an opening 203 on its face side (see FIG. 14). The opening 203 is covered by the face member 200b. The face member 200b and the back member 200c are joined to each other by welding to form a boundary 201 between the two. The boundary 201 is located on the contour line of the opening 203.

As shown in FIG. 14 and FIG. 16, the face portion 202 includes a metal face portion M2 made of a metal and the urethane layer member U2 disposed on the outside of the metal face portion M2. The urethane layer member U2 is made of a polyurethane.

At least a part of the metal face portion M2 is formed by the face member 200b. In the present embodiment, the entirety of the metal face portion M2 is formed by the face member 200b.

The metal face portion M2 includes an outer surface 220 and an inner surface 222. The inner surface 222 of the metal face portion M2 faces the hollow interior h. The inner surface 222 constitutes the face inner surface 202b. The urethane layer member U2 is disposed on the outer surface 220 of the metal face portion M2. The inner surface 224 of the urethane layer member U2 is in contact with the outer surface 220. Another layer (other layers) may be interposed between the outer surface 220 and the urethane layer member U2. The outer surface 226 of the urethane layer member U2 constitutes the striking face 202a. The metal face portion M2 supports the urethane layer member U2 from inside the head 200.

In the above-described head 100, a part of the outer surface 120 of the metal face portion M1 is covered by the urethane layer member U1. On the other hand, in the head 200, the entirety of the outer surface 220 of the metal face portion M2 is covered by the urethane layer member U2. The metal face portion M2 is not viewable from the outside of the finished head 200. The boundary 201 between the face member 200b and the back member 200c is also covered by the urethane layer member U2. The urethane layer member U2 extends to the outside of the striking face 202a. The urethane layer member U2 extends to the back side of the 45-degree boundary line L2 (see FIG. 6). The urethane layer member U2 extends into the crown portion 204. The urethane layer member U2 extends to the back side of the 45-degree boundary line L2 on the crown side. The urethane layer member U2 extends into the sole portion 206. The urethane layer member U2 extends to the back side of the 45-degree boundary line L2 on the sole side.

The back member 200c includes a stepped portion 228. The stepped portion 228 is disposed at a position corresponding to the position of a rear edge 230 of the urethane layer member U2. The stepped portion 228 is formed in the crown portion 204. The stepped portion 228 is formed in the sole portion 206. The height of the stepped portion 228 corresponds to the thickness of the urethane layer member U2 at its rear edge 230. The head outer surface does not substantially include a step (surface step) on a boundary k2 between the urethane layer member U2 and the back member 200c (head body 200a). In the present embodiment, the boundary k2 is located on the outside of the striking face 202a. The surface step on the boundary k2 can have a height of less than or equal to 2 mm, further can have a height of less than or equal to 1 mm, and still further can have a height of less than or equal to 0.5 mm.

In the present embodiment, a part of the urethane layer member U2 is included in the face portion 202. The urethane layer member U2 forms the entirety of the striking face 202a. Furthermore, the urethane layer member U2 extends to the outside of the contour line of the striking face 202a. The urethane layer member U2 extends into the crown portion 204. The urethane layer member U2 forms a part of the crown outer surface 204a. The urethane layer member U2 extends into the sole portion 206. The urethane layer member U2 forms a part of the sole outer surface 206a.

As shown in FIG. 16, in the head 200 of the second embodiment, the urethane layer member U2 extends to the outside of the striking face 202a. The urethane layer member U2 extends to the back side of the 45-degree boundary line L2 (see FIG. 6). The head body 200a includes an edge fixing portion 234 that fixes an edge portion 232 of the urethane layer member U2 on the back side of the 45-degree boundary line L2. The edge fixing portion 234 is located on the outside of the striking face 202a. The edge fixing portion 234 is constituted by the stepped portion 228, and the outer surface of the head body 200a in the vicinity of the stepped portion 228. The edge portion 232 of the urethane layer member U2 is fixed to the edge fixing portion 234 by adhesion.

A covered part, which is covered by the urethane layer member U2, of the outer surface 220 of the metal face portion M2 has a surface roughness that satisfies the following (a) and/or (b).

(a) The surface roughness is greater than 4.5 um when expressed by the arithmetic mean roughness Ra.
(b) The surface roughness is greater than 25 um when expressed by the maximum peak-to-valley height Rz.

The covered part, which is covered by the urethane layer member U2, of the outer surface 220 of the metal face portion M2 satisfies the following (c) .
(c) Developed interfacial area ratio Sdr is greater than or equal to 0.12.
The covered part, which is covered by the urethane layer member U2, of the outer surface 220 of the metal face portion M2 includes minute protrusions and minute recesses which have a top-to-bottom height of less than or equal to 100 nm. A primer and/or an adhesive is/are disposed between the metal face portion M2 and the urethane layer member U2.

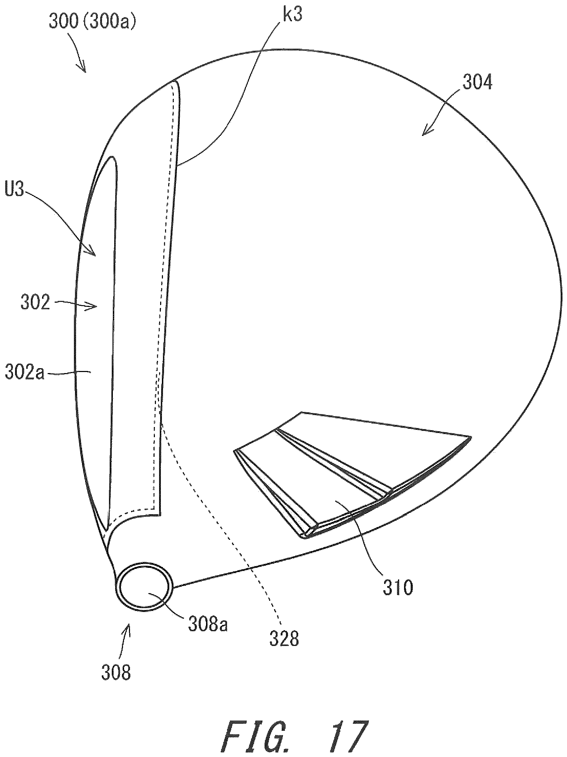

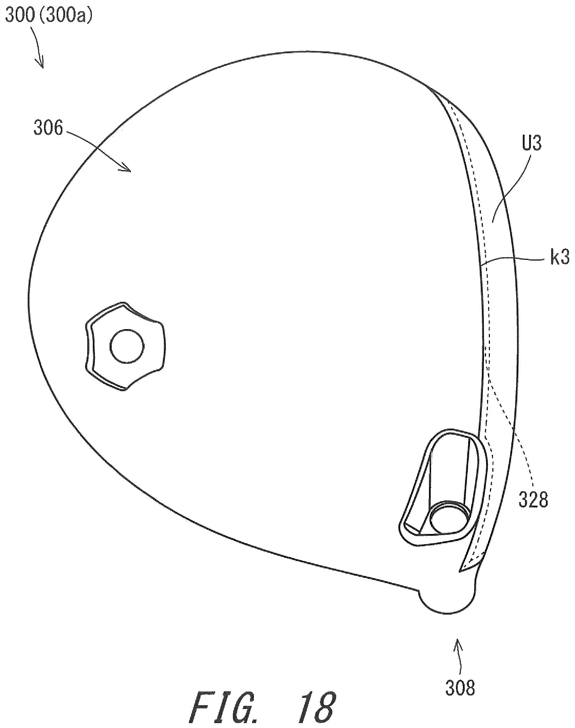

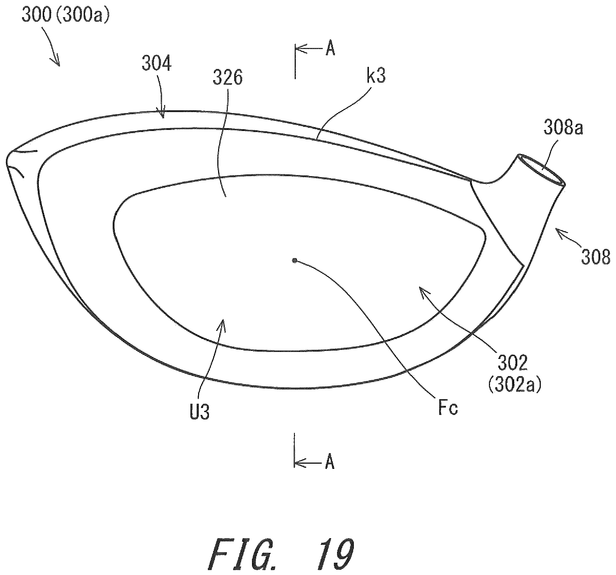

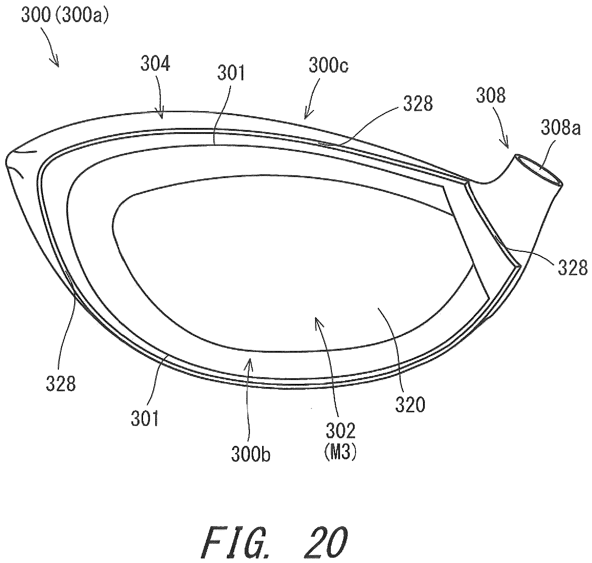

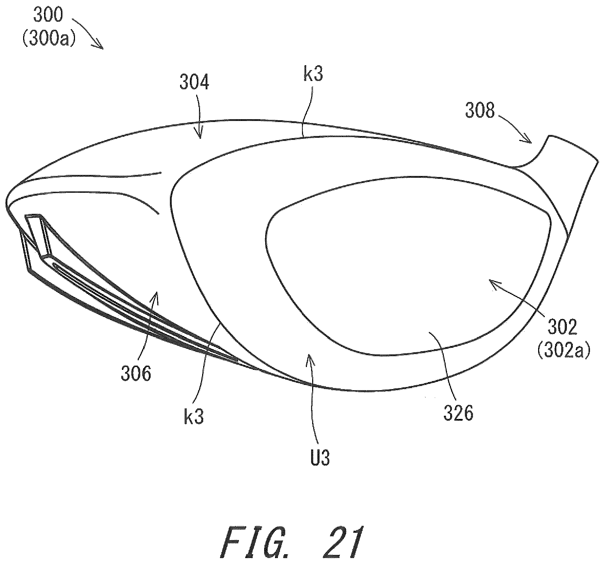

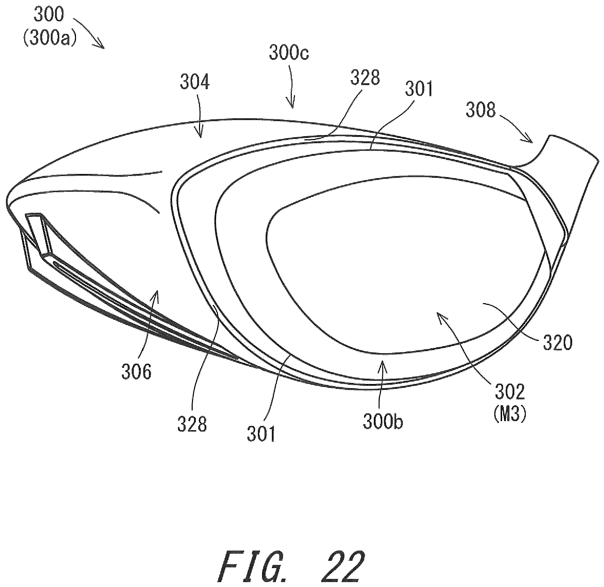

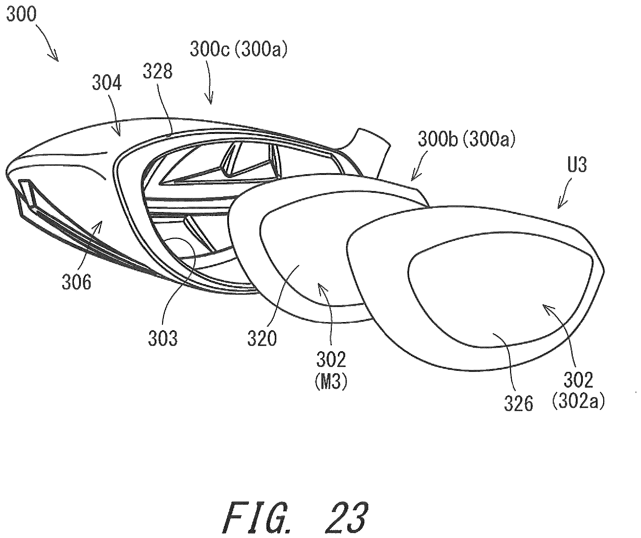

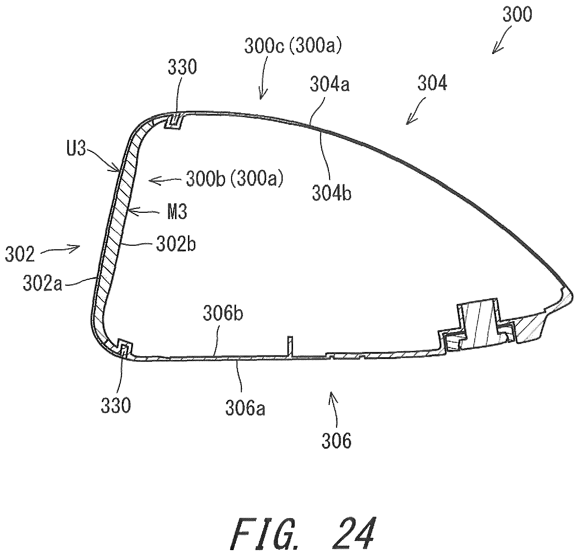

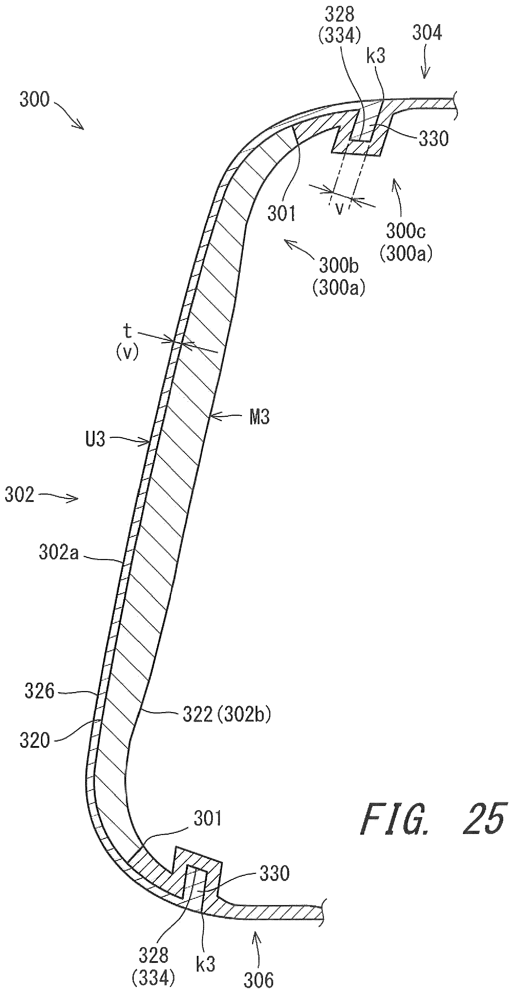

FIG. 17 is a plan view of a golf club head 300 according to a third embodiment. FIG. 18 is a bottom view of the head 300. FIG. 19 is a front view of the head 300. FIG. 20 is a front view of the head 300 from which its urethane layer member U3 is removed. FIG. 21 is a perspective view of the head 300. FIG. 22 is a perspective view of the head 300 from which the urethane layer member U3 is removed. FIG. 23 is an exploded perspective view of the head 300. FIG. 24 is a cross-sectional view taken along line A-A in FIG. 19. FIG. 25 is a partially enlarged view of FIG. 24.
As shown in FIG. 17 to FIG. 25, the head 300 includes a face portion 302, a crown portion 304, a sole portion 306, and a hosel portion 308. The head 300 is a wood type head. As shown in FIG. 24, the head 300 has a hollow structure. The head 300 has a hollow interior h.
As shown in FIG. 24, the face portion 302 includes a striking face 302a and a face inner surface 302b. The striking face 302a is a surface that is brought into contact with a golf ball at impact between the head 300 and the golf ball. The striking face 302a is the outer surface of the face portion 302. The face inner surface 302b is the inner surface of the face portion 302. The face inner surface 302b faces the hollow interior h. As shown in FIG. 19, the striking face 302a has a face center Fc as defined above.
The crown portion 304 constitutes the upper surface of the head 300. The crown portion 304 includes a crown outer surface 304a and a crown inner surface 304b. The crown inner surface 304b faces the hollow interior h. The crown portion 304 includes a crown protrusion 310. The sole portion 306 constitutes the lower surface of the head 300. The sole portion 306 includes a sole outer surface 306a and a sole inner surface 306b. The sole inner surface 306b faces the hollow interior h. The hosel portion 308 is disposed on a heel-side part of the head 300. The hosel portion 308 has a hosel hole 308a.
As shown in FIG. 23 and FIG. 25, the head 300 includes the urethane layer member U3. The urethane layer member U3 is provided as a constituent member of the face portion 302. The urethane layer member U3 forms the entirety of the striking face 302a. The urethane layer member U3 extends to the outside of the striking face 302a. The urethane layer member U3 extends to the back side of the 45-degree boundary line L2 (see FIG. 6).
The head 300 is constituted by a head body 300a and the urethane layer member U3. The head body 300a is made of a metal (titanium alloy). As shown in FIG. 23, the head body 300a is constituted by a plurality of members. The head body 300a is constituted by a face member 300b and a back member 300c. The back member 300c is joined on the back side of the face member 300b. The face member 300b includes a part that constitutes a part of the face portion 302. The back member 300c includes a part that constitutes the crown portion 304, and a part that constitutes the sole portion 306. The back member 300c has an opening 303 on its face side, and the opening 303 is covered by the face member 300b. The face member 300b and the back member 300c are joined to each other by welding to form a boundary 301 (see FIG. 22) between the two.
As shown in FIG. 25, the face portion 302 includes a metal face portion M3 made of a metal and the urethane layer member U3 disposed outside the metal face portion M3. The urethane layer member U3 is made of a polyurethane.
At least a part of the metal face portion M3 is formed by the face member 300b. In the present embodiment, the entirety of the metal face portion M3 is formed by the face member 300b.
The metal face portion M3 includes an outer surface 320 and an inner surface 322. The inner surface 322 of the metal face portion M3 faces the hollow interior h. The inner surface 322 constitutes the face inner surface 302b. The urethane layer member U3 is disposed on the outer surface 320 of the metal face portion M3. The inner surface 324 of the urethane layer member U3 is in contact with the outer surface 320. Another layer (other layers) may be interposed between the outer surface 320 and the urethane layer member U3. The outer surface 326 of the urethane layer member U3 is the striking face 302a. The metal face portion M3 supports the urethane layer member U3 from inside the head 300.

In the head 300, the entirety of the outer surface 320 of the metal face portion M3 is covered by the urethane layer member U3. The metal face portion M3 is not viewable from the outside of the finished head 300. The boundary 301 between the face member 300b and the back member 300c is also covered by the urethane layer member U3. The urethane layer member U3 extends to the outside of the striking face 302a. The urethane layer member U3 extends to the back side of the 45-degree boundary line L2 (see FIG. 6). The urethane layer member U3 extends into the crown portion 304. The urethane layer member U3 extends to the back side of the 45-degree boundary line L2 on the crown side. The urethane layer member U3 extends into the sole portion 306. The urethane layer member U3 extends to the back side of the 45-degree boundary line L2 on the sole side.

As shown in FIG. 25, the head body 300a includes a groove 328. The groove 328 is disposed on the outside of the striking face 302a. The groove 328 is formed in the back member 300c. The groove 328 is disposed at a position corresponding to the position of an edge portion (rear edge portion) 330 of the urethane layer member U3. The groove 328 is formed in the crown portion 304. The groove 328 is formed in the sole portion 306. The edge portion 330 of the urethane layer member U3 is bent to extend toward the inside of the head 300. The extending direction of the edge portion 330 coincides with the depth direction of the groove 328. The width of the groove 328 corresponds to the thickness of the edge portion 330. The edge portion 330 is inserted into the groove 328. The groove 328 is filled with the edge portion 330.

The head outer surface does not substantially include a step (surface step) on a boundary k3 between the urethane layer member U3 and the back member 300c (head body 300a). The boundary k3 is located on the outside of the striking face 302a. The surface step on the boundary k3 can have a height of less than or equal to 2 mm, further can have a height of less than or equal to 1 mm, and still further can have a height of less than or equal to 0.5 mm.

In the present embodiment, a part of the urethane layer member U3 is included in the face portion 302. The urethane layer member U3 forms the entirety of the striking face 302a. The urethane layer member U3 extends into the crown portion 304. The urethane layer member U3 forms a part of the crown outer surface 304a. The urethane layer member U3 extends into the sole portion 306. The urethane layer member U3 forms a part of the sole outer surface 306a.

As shown in FIG. 25, the urethane layer member U3 extends to the outside of the striking face 302a also in the head 300 of the third embodiment. The urethane layer member U3 extends to the back side of the 45-degree boundary line L2 (see FIG. 6). The head body 300a includes an edge fixing portion 334 that fixes the edge portion 330 of the urethane layer member U3 on the back side of the 45-degree boundary line L2. The edge fixing portion 334 is located on the outside of the striking face 302a. In the present embodiment, the edge fixing portion 334 is the groove 328. The edge fixing portion 334 is formed in the crown portion 304. The edge fixing portion 334 is formed in the sole portion 306. The groove 328 (edge fixing portion 334) physically holds the edge portion 330. In addition, the edge portion 330 is fixed to the groove 328 (edge fixing portion 334) by adhesion. Of the urethane layer member U3, a part that constitutes the striking face 302a, which is hereinafter also referred to as striking face constituting part, has a thickness t of smaller than a thickness t of the edge portion 330 of the urethane layer member U3. That is, the thickness t of the edge portion 330 of the urethane layer member U3 is greater than the thickness t of the striking face constituting part of the urethane layer member U3. The thickness t is measured in the direction of a line normal to the outer surface of the head 300. The edge portion 330 of the urethane layer member U3 has a layer thickness v of greater than a layer thickness v of the striking face constituting part of the urethane layer member U3. The layer thickness v is measured in a direction in which the thickness of the urethane layer member U3 is the minimum in the vertical cross section (see FIG. 25).

A covered part, which is covered by the urethane layer member U3, of the outer surface 320 of the metal face portion M3 has a surface roughness that satisfies the following (a) and/or (b).

(a) The surface roughness is greater than 4.5 um when expressed by the arithmetic mean roughness Ra.
(b) The surface roughness is greater than 25 um when expressed by the maximum peak-to-valley height Rz.

The covered part, which is covered by the urethane layer member U3, of the outer surface 320 of the metal face portion M3 satisfies the following (c) .

(c) Developed interfacial area ratio Sdr is greater than or equal to 0.12.

The covered part, which is covered by the urethane layer member U3, of the outer surface 320 of the metal face portion M3 may include minute protrusions and minute recesses which have a top-to-bottom height of less than or equal to 100 nm. A primer and/or an adhesive is/are disposed between the metal face portion M3 and the urethane layer member U3.

FIG. 26A to FIG. 26E are front views of head bodies of heads of modification examples. In each of these heads, its urethane layer member is removed. Metal grooves shown in the modification examples are applicable to the above-described heads of the first to third embodiments.

FIG. 26A is a front view of a head body 400a of a head 400 according to a modification example. In other words, FIG. 26A is a front view of the head 400 from which its urethane layer member is removed. The head body 400a includes a metal face portion M4. A covered part, which is covered by the urethane layer member, of the outer surface 420 of the metal face portion M4 may include one or more grooves. In the present embodiment, the outer surface 420 includes a plurality of grooves s4. For the sake of distinguishing between the grooves s4 and other grooves, the grooves s4 provided on the outer surface 420 of the metal face portion M4 are also referred to as metal grooves in the present disclosure. The metal grooves s4 are covered by the urethane layer member, and thus are not viewable from the outside of the head 400. Needless to say, this is true only when the urethane layer member does not have transparency. The urethane layer member may have transparency. That is, the urethane layer member may be transparent or semitransparent. When the urethane layer member is transparent or semitransparent, the metal grooves s4 can be viewable from the outside of the head 400.

The outer surface 420 of the metal face portion M4 includes a central region 440 that includes no metal groove s4, a toe groove region 442 that is located on the toe side with respect to the central region 440 and in which the metal grooves s4 are disposed, and a heel groove region 444 that is located on the heel side with respect to the central region 440 and in which the metal grooves s4 are disposed. The central region 440 includes a position at which the face center Fc is located in the front elevation view.

The metal face portion M4 includes a striking face corresponding part 446 that is covered by a part of the urethane layer member, this part of the urethane layer member constituting the striking face. The central region 440, the toe groove region 442, and the heel groove region 444 are located in the striking face corresponding part 446. The central region 440 extends on the striking face corresponding part 446 from its crown side to its sole side.

Each of the metal grooves s4 extends in an upright direction. The upright direction can mean a direction having a range of greater than or equal to -20° and less than or equal to 20° with respect to the up-down direction in the front elevation view. The metal grooves s4 extend in the upright direction in regions located outside the impact area. In the metal face portion M4, the density of the metal grooves s4 on the outside of the impact area is greater than the density of the metal grooves s4 on the inside of the impact area.

FIG. 26B is a front view of a head body 500a of a head 500 according to another modification example. In other words, FIG. 26B is a front view of the head 500 from which its urethane layer member is removed. The head body 500a includes a metal face portion M5. A covered part, which is covered by the urethane layer member, of the outer surface 520 of the metal face portion M5 includes a plurality of grooves (metal grooves) s5. The metal grooves s5 are covered by the urethane layer member. When the urethane layer member does not have transparency, the metal grooves s5 are not viewable from the outside of the head 500.

The outer surface 520 of the metal face portion M5 includes a central region 540 that includes no metal groove s5, a toe groove region 542 that is located on the toe side with respect to the central region 540 and in which the metal grooves s5 are disposed, a heel groove region 544 that is located on the heel side with respect to the central region 540 and in which the metal grooves s5 are disposed, an upper groove region 550 that is located on the upper side with respect to the central region 540 and in which the metal grooves s5 are disposed, and a lower groove region 552 that is located on the lower side with respect to the central region 540 and in which the metal grooves s5 are disposed. The central region 540 includes a position at which the face center Fc is located in the front elevation view.

The metal face portion M5 includes a striking face corresponding part 546 that is covered by a part of the urethane layer member, this part of the urethane layer member constituting the striking face. The central region 540, the toe groove region 542, the heel groove region 544, the upper groove region 550, and the lower groove region 552 are located in the striking face corresponding part 546.

Each of the metal grooves s5 located in the toe groove region 542 and the heel groove region 544 extends in the upright direction. Each of the metal grooves s5 located in the upper groove region 550 and the lower groove region 552 extends in a horizontal direction. The horizontal direction can mean a direction having a range of greater than or equal to -20° and less than or equal to 20° with respect to the toe-heel direction in the front elevation view. The metal grooves s5 located on the outside of the impact area extend in the upright direction. The metal grooves s5 located on the inside of the impact area extend in the horizontal direction. The extending direction of the metal grooves s5 on the inside of the impact area differs from the extending direction of the metal grooves s5 on the outside of the impact area.

FIG. 26C is a front view of a head body 600a of a head 600 according to still another modification example. In other words, FIG. 26C is a front view of the head 600 from which its urethane layer member is removed. The head body 600a includes a metal face portion M6. A covered part, which is covered by the urethane layer member, of the outer surface 620 of the metal face portion M6 includes a plurality of grooves (metal grooves) s6. The metal grooves s6 are covered by the urethane layer member. When the urethane layer member does not have transparency, the metal grooves s6 are not viewable from the outside of the head 600.

The outer surface 620 of the metal face portion M6 includes a central region 640 that includes no metal groove s6, a toe groove region 642 that is located on the toe side with respect to the central region 640 and in which metal grooves s6 are disposed, and a heel groove region 644 that is located on the heel side with respect to the central region 640 and in which the metal grooves s6 are disposed. The central region 640 includes the face center in the front elevation view.

The metal face portion M6 includes a striking face corresponding part 646 that is covered by a part of the urethane layer member, this part of the urethane layer member constituting the striking face. The central region 640, the toe groove region 642, and the heel groove region 644 are located in the striking face corresponding part 646. The central region 640 extends on the striking face corresponding part 646 from its crown side to its sole side.

Each of the metal grooves s6 located in the toe groove region 642 extends curvedly so as to protrude toward the toe side. Each of the metal grooves s6 located in the heel groove region 644 extends curvedly so as to protrude toward the heel side. In the metal face portion M6, the density of the metal grooves s6 on the outside of the impact area is greater than the density of the metal grooves s6 on the inside of the impact area.

FIG. 26D is a front view of a head body 700a of a head 700 according to still another modification example. In other words, FIG. 26D is a front view of the head 700 from which its urethane layer member is removed. The head body 700a includes a metal face portion M7. A covered part, which is covered by the urethane layer member, of the outer surface 720 of the metal face portion M7 includes a plurality of grooves (metal grooves) s7. The metal grooves s7 are covered by the urethane layer member. When the urethane layer member does not have transparency, the metal grooves s7 are not viewable from the outside of the head 700.

The outer surface 720 of the metal face portion M7 does not include a central region having no metal groove s7. The metal grooves s7 are disposed on the entirety of the outer surface 720. The metal face portion M7 includes a striking face corresponding part 746 that is covered by a part of the urethane layer, this part of the urethane layer member constituting the striking face. All the metal grooves s7 are disposed on the striking face corresponding part 746. Each of the metal grooves s7 extends in the horizontal direction. The horizontal direction can mean a direction having a range of greater than or equal to -20° and less than or equal to 20° with respect to the toe-heel direction in the front elevation view.

FIG. 26E is a front view of a head body 800a of a head 800 according to still another modification example. In other words, FIG. 26E is a front view of the head 800 from which its urethane layer member is removed. The head body 800a includes a metal face portion M8. A covered part, which is covered by the urethane layer member, of the outer surface 820 of the metal face portion M8 includes a plurality of grooves (metal grooves) s8. The metal grooves s8 are covered by the urethane layer member. When the urethane layer member does not have transparency, the metal grooves s8 are not viewable from the outside of the head 800. The metal face portion M8 includes a striking face corresponding part 846 that is covered by a part of the urethane layer member, this part of the urethane layer member constituting the striking face. All the metal grooves s8 are disposed in the striking face corresponding part 846. The metal grooves s8 extend along circles having a common center at a predetermined position. This center can be located at the face center Fc or in the vicinity of the face center Fc. This center can be positioned within a circle having a center at the face center Fc and a radius r in the front elevation view. The radius r can be 22 mm, further can be 16 mm, and still further can be 10 mm.

The urethane layer member may have one or more grooves on its outer surface. In order to distinguish between these grooves and other grooves, these grooves are also referred to as urethane grooves. The urethane grooves are disposed in a region constituting the striking face. The urethane grooves are grooves formed on the striking face, which can function as so-called face grooves (score lines). Note that, although both the urethane grooves and the metal grooves are provided in the following embodiments, a head may include only the urethane grooves while not including the metal grooves.

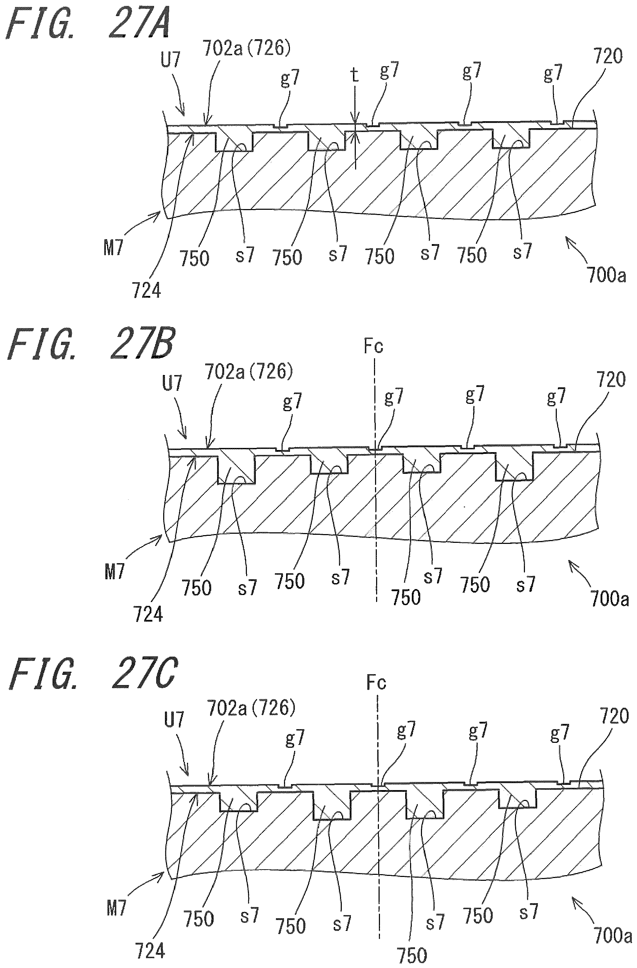

FIG. 27A is a vertical cross-sectional view of a modification example that includes urethane grooves. The head of this modification example is made by the combination of the above-described head body 700a (see FIG. 26D) and a urethane layer member U7. The urethane layer member U7 includes grooves g7. The grooves provided on the urethane layer member U7 are also referred to as urethane grooves. The urethane grooves g7 are formed on a striking face 702a. The urethane grooves g7 extend in the horizontal direction. The urethane grooves g7 extend parallel to the metal grooves s7. One urethane groove g7 is disposed between two adjacent metal grooves s7. The urethane grooves g7 and the metal grooves s7 are alternately arranged. The urethane grooves g7 are disposed so as not to overlap the metal grooves s7. The urethane grooves g7 can be formed in accordance with golf rules concerning grooves on an impact area.

The urethane layer member U7 includes protrusions 750 on the inner surface 724 of the urethane layer member U7. The protrusions 750 are also referred to as inner surface protrusions. The inner surface 724 of the urethane layer member U7 includes the inner surface protrusions 750. The inner surface protrusions 750 are inserted into the metal grooves s7. The height of the inner surface protrusions 750 is equal to the depth of the metal grooves s7. The width of the inner surface protrusions 750 is equal to the width of the metal grooves s7. Each metal groove s7 is filled with one inner surface protrusion 750. The inner surface protrusions 750 are disposed so as not to overlap the urethane grooves g7. Note that the inner surface protrusions 750 may be inserted into metal grooves s7 after being formed on the urethane layer member U7 in advance, or may be formed by the metal grooves s7.

FIG. 27B is a vertical cross-sectional view of another modification example. The difference between the embodiment of FIG. 27B and the embodiment of FIG. 27A is only depths of the metal grooves s7 (and heights of the inner surface protrusions 750). In the present embodiment, the metal grooves s7 having depths different from each other are included. The closer the position of the metal groove s7 is to the face center Fc, the smaller the depth of the metal groove s7 is. In other words, the farther the position of the metal groove s7 is from the face center Fc, the greater the depth of the metal groove s7 is. This structure can be suitable for golfers who often hit a ball at an off-center position of the striking face, such as average golfers.

FIG. 27C is a vertical cross-sectional view of still another modification example. The difference between the embodiment of FIG. 27C and the embodiment of FIG. 27A is only depths of the metal grooves s7 (and heights of the inner surface protrusions 750). In the present embodiment, the metal grooves s7 having depths different from each other are included. The closer the position of the metal groove s7 is to the face center Fc, the greater the depth of the metal groove s7 is. In other words, the farther the position of the metal groove s7 is from the face center Fc, the smaller the depth of the metal groove s7 is. This structure can be suitable for golfers who often hit a ball at or in the vicinity of the face center Fc, such as advanced golfers and professional golfers.

The embodiments of FIG. 27A to FIG. 27C are modification examples in which the head body 700a shown in FIG. 26D is used. However, the structure having the inner surface protrusions inserted into metal grooves can be applicable to metal grooves in all structures, including embodiments of FIG. 26A to FIG. 26E.

The above-described embodiments can exhibit the following advantageous effects.

The metal face portion enables a framework portion, including the face portion, of the head to be made by a metal, which can enhance the rebound performance of the head. On the other hand, a head made of a metal and having a high rebound performance tends to cause an early ball release from the head, and to cause a ball sliding on the face, which makes it difficult to obtaining a sufficient ball sticking feeling. That is, in this face, a hit golf ball tends to swiftly move away from the striking face, and to slide on the striking face at impact with the striking face. This tends to cause deterioration in controllability of the head. In addition, such an early ball release from the head might give the golfer a hard feel at impact. Note that the controllability means a performance of a head which enables a golfer to intentionally control a hit ball. A head having an insufficient controllability can reduce the probability of achieving a shot with an intentional ball trajectory.

The urethane layer member is disposed on the metal face portion, which can achieve a sufficient ball sticking feeling in a head made of a metal and having a high rebound performance. When the urethane layer member is disposed on the outside of the metal face portion and the surface roughness of the metal face portion at the interface between the metal face portion and the urethane layer member is increased, the ball sticking feeling can be enhanced. It is difficult to measure the ball sticking feeling objectively, but golfers (particularly advanced golfers and professional golfers) can recognize the ball sticking feeling as a feeling at impact with a golf ball.

At impact between the head and a golf ball, the urethane layer member made of a resin tends to be in tight contact with the cover of the golf ball, which is made of a resin. This effectively prevents the golf ball from sliding on the striking face at the impact. As a result, the ball sticking feeling can be enhanced, and the controllability can be improved.

When the material of the cover of a golf ball is a polyurethane, the urethane layer member and the cover of the ball are brought into further tight contact with each other, which can improve the ball sticking feeling. Advanced golfers and professional golfers particularly tend to use a golf ball whose cover is made of a polyurethane.

An increase in surface roughness of the metal face portion causes an anchor effect between the metal face portion and the urethane layer member. This prevents the urethane layer member from sliding on the metal face portion at impact with a golf ball, which can enhance the ball sticking feeling.

The anchor effect brought by the surface roughness of the metal face portion can reach a golf ball through the urethane layer member. The urethane layer member is compressed by a strong pressing force at impact with the golf ball to follow the shape of the metal face portion, whereby the minute protrusions and recesses on the metal face portion appear also on the striking face. This can further enhance the ball sticking feeling.

The anchor effect brought by the surface roughness of the metal face portion enhances adhesion of the urethane layer member to the metal face portion. This effectively prevents the urethane layer member from sliding on and/or coming off the metal face portion. The use of an adhesive and/or a primer can further enhance the adhesion of the urethane layer member to the metal face portion.

Depending on the surface roughness or the developed interfacial area ratio of the metal face portion, the surface area of the metal face portion can be increased, and the contact area for joining between the urethane layer member and the metal face portion can be increased. This further enhances the adhesion of the urethane layer member to the metal face portion. The minute protrusions and minute recesses which have a top-to-bottom height of less than or equal to 100 nm further increase the surface area of the metal face portion, and further enhance the adhesion.

When the metal face portion having a high rebound performance is brought into contact with a golf ball, the golfer tends to have a hard feel. The urethane layer member disposed on the outer surface of the metal face portion provides an improved feeling at impact with a golf ball.

In the head 200 of the second embodiment, the urethane layer member U2 extends to the outside of the striking face 202a, and the edge portion 232 of the urethane layer member U2 is fixed by the edge fixing portion 234 located on the outside of the striking face 202a. In this configuration, golf balls do not collide with the edge portion 232 as long as the golf balls collide with the striking face 202a. If a golf ball collides with the edge portion of the urethane layer member U2, the urethane layer member U2 becomes insufficient in quantity at and around the hitting point, whereby the fixing strength of the urethane layer member U2 onto the metal face portion against shearing force deteriorates. Since the edge portion 232 is located on the outside of the striking face 202a, golf balls are less likely to collide with the edge portion 232, and the fixing strength of the urethane layer member U2 is less likely to be insufficient. As a result, the fixing strength of the urethane layer member U2 is enhanced.

In the head 300 of the third embodiment, the edge fixing portion 334 disposed on the outside of the striking face 302a is the groove 328. The edge portion 330 is inserted into the groove 328, whereby the edge portion 330 is physically held by the groove 328. In this embodiment, the advantageous effect brought by the edge fixing portion 334 disposed on the outside of the striking face 302a is further enhanced. Note that the edge portion 330 may be sandwiched by the edge fixing portion 334. For example, the edge portion 330 may be inserted into the groove 328 while being pressed by the groove 328.

As shown in FIG. 26A to FIG. 26E, the head 400 to the head 800 each have metal grooves. The metal grooves suppress sliding of the urethane layer member on the metal face portion by the effect of edges of the metal grooves (hereinafter, this effect is also referred to as "edge effect"). In addition, the edge effect of the metal grooves can reach a golf ball through the urethane layer member. The urethane layer member is compressed by a strong pressing force at impact with a golf ball, and the edge effect of the metal grooves can reach the striking face. Accordingly, the ball sticking feeling can be further improved.

As shown in FIG. 26A to FIG. 26E, the head 400 to the head 800 have metal grooves s4 to metal grooves s8, respectively. These metal grooves exhibit the edge effect which suppresses sliding of the urethane layer member on the metal face portion. The urethane layer member is compressed and pushed into the metal grooves by a strong pressing force at impact with a golf ball. This enhances the edge effect. The metal grooves enhance the fixing strength of the urethane layer member against shearing force.

As shown in the embodiments of FIG. 26A, FIG. 26B and FIG. 26C, the metal grooves can be selectively (or at high density) disposed on the peripheral area of the striking face. As described above, when a golf ball collides with the edge portion of the urethane layer member, the fixing strength of the urethane layer member against shearing force tends to deteriorate. The metal grooves disposed on the peripheral area of the striking face can effectively enhance the fixing strength against collision between the edge portion of the urethane layer member and a golf ball. In addition, as shown in FIG. 26A to FIG. 26E, the metal grooves can extend in a direction which is substantially perpendicular to the direction of the shearing force applied by the impact with a golf ball. This structure can enhance the fixing strength against the shearing force.

When the inner surface protrusions 750 which are inserted into the metal grooves s7 are provided as shown in FIG. 27A to FIG. 27C, the inner surface protrusions 750 engage with the metal grooves s7, which further enhances the fixing strength against the shearing force. In addition, the urethane grooves g7 are disposed so as not to overlap the metal grooves s7, which can prevent the deterioration of the function of the urethane grooves g7 as face grooves. As shown in FIG. 27B, the metal grooves s7 may have a configuration in which the farther the position of the metal groove s7 is from the face center Fc, the greater the depth of the metal groove s7 is. This configuration can effectively increase the fixing strength of the peripheral area of the striking face. As shown in FIG. 27C, the metal grooves s7 may have a configuration in which the closer the position of the metal groove s7 is to the face center Fc, the greater the depth of the metal groove s7 is. This configuration can effectively increase the fixing strength at the face center Fc having a high frequency of striking a golf ball.

From the viewpoint of the ball sticking feeling, the arithmetic mean roughness Ra of the covered part, which is covered by the urethane layer member, of the outer surface of the metal face portion is preferably greater than 4.5 um, more preferably greater than or equal to 7 $\mu$m, and still more preferably greater than or equal to 10 um. Also from the viewpoint of the fixing strength, the arithmetic mean roughness Ra is preferably great. When the arithmetic mean roughness Ra is excessively great, the protrusions and recesses of the metal face portion can excessively appear on the striking face through the urethane layer member. In this case, the positional relationship between dimples of a golf ball and the protrusions and recesses when the striking face is in contact with the golf ball can influence the motion of the golf ball. From this viewpoint, the arithmetic mean roughness Ra is preferably less than or equal to 100 $\mu$m, more preferably less than or equal to 90 um, and still more preferably less than or equal to 80 um.

As to the arithmetic mean roughness Ra which is a surface roughness measured along a line, the above-described preferable range is preferably satisfied in both measurement along a line in the upright direction and measurement along a ling in the horizontal direction. In this case, the fixing strength can be increased against both shearing force in the upright direction and shearing force in the horizontal direction.

From the viewpoint of the ball sticking feeling, the maximum peak-to-valley height Rz of the covered part, which is covered by the urethane layer member, of the outer surface of the metal face portion is preferably greater than 25 $\mu$m, more preferably greater than or equal to 40 $\mu$m, and still more preferably greater than or equal to 60 um. Also from the viewpoint of the fixing strength, the maximum peak-to-valley height Rz is preferably great. When the maximum peak-to-valley height Rz is excessively great, the protrusions and recesses of the metal face portion can excessively appear on the striking face through the urethane layer member. In this case, the positional relationship between dimples of a golf ball and the protrusions and recesses when the striking face is in contact with the golf ball can influence the motion of the golf ball. From this viewpoint, the maximum peak-to-valley height Rz is preferably less than or equal to 400 $\mu$m, more preferably less than or equal to 390 $\mu$m, and still more preferably less than or equal to 380 um.

As to the maximum peak-to-valley height Rz which is a surface roughness measured along a line, the above-described preferable range is preferably satisfied in both measurement along a line in the upright direction and measurement along a ling in the horizontal direction. In this case, the fixing strength can be increased against both shearing force in the upright direction and shearing force in the horizontal direction.

From the viewpoint of the ball sticking feeling, the developed interfacial area ratio Sdr of the covered part, which is covered by the urethane layer member, of the outer surface of the metal face portion is preferably greater than or equal to 0.12, more preferably greater than or equal to 0.2, and still more preferably greater than or equal to 0.25. Also from the viewpoint of the fixing strength, the developed interfacial area ratio Sdr is preferably great. Considering the preferable upper limit values of the arithmetic mean roughness Ra and the maximum peak-to-valley height Rz, the developed interfacial area ratio Sdr is preferably less than or equal to 10, more preferably less than or equal to 9, and still more preferably less than or equal to 8.

From the viewpoint of the ball sticking feeling, the covered part, which is covered by the urethane layer member, of the outer surface of the metal face portion may satisfy the following (d). Also from the viewpoint of the fixing strength, the following (d) may be satisfied.

$$\text{(d)} \quad \text{Sdr} \geq 0.02331\text{Ra} + 0.07$$

wherein, Sdr represents the developed interfacial area ratio, and Ra represents the arithmetic mean roughness in this formula.

From the viewpoint of the ball sticking feeling, the covered part, which is covered by the urethane layer member, of the outer surface of the metal face portion may satisfy the following (e). Also from the viewpoint of the fixing strength, the following (e) may be satisfied.

(e) The arithmetic mean roughness Ra is greater than 4.5, and the developed interfacial area ratio Sdr is greater than 0.07.

From the viewpoint of the ball sticking feeling, the covered part, which is covered by the urethane layer member, of the outer surface of the metal face portion may satisfy the following (f). Also from the viewpoint of the fixing strength, the following (f) may be satisfied.

$$\text{(f)} \quad \text{Sdr} \geq 0.0049\text{Rz} + 0.05$$

wherein, Sdr represents the developed interfacial area ratio, and Rz represents the maximum peak-to-valley height in this formula.

From the viewpoints of suppressing sliding of the urethane layer member and enhancing the ball sticking feeling, the depth of each metal groove is preferably greater than or equal to 0.1 mm, more preferably greater than or equal to 0.15 mm, and still more preferably greater than or equal to 0.2 mm. Also from the viewpoint of the fixing strength, the depth of each metal groove is preferably great. From the viewpoint of the strength of the metal face portion, the depth of each metal groove is preferably less than or equal to 2 mm, more preferably less than or equal to 1.9 mm, and still more preferably less than or equal to 1.8 mm. The depth of each metal groove is measured in a direction perpendicular to the striking face.

From the viewpoints of suppressing sliding of the urethane layer member and enhancing the ball sticking feeling, the width of each metal groove is preferably greater than or equal to 0.5 mm, more preferably greater than or equal to 0.75 mm, and still more preferably greater than or equal to 1 mm. From the viewpoint of the fixing strength, the width of each metal groove is preferably great. From the viewpoint of the strength of the metal face portion, the width of each metal groove is preferably less than or equal to 6 mm, more preferably less than or equal to 5.5 mm, and still more preferably less than or equal to 5 mm. The width of each metal groove is measured in accordance with a 30-degree measurement method (test on file with the in the R&A and the USGA) which is the method for measuring the width of grooves on the impact area of the striking face. Note that the metal grooves are not grooves formed on the striking face and thus are not restricted by golf rules. Accordingly, each metal groove may extend curvedly, may have a width at its bottom greater than a width at its opening, or may have an asymmetric cross-sectional shape, for example. The metal grooves do not have to be arranged at equal intervals. The metal grooves may have various horizontal cross sections. The area of the cross section of each metal groove may be freely set.

An adhesive that has an excellent joining strength for joining between the urethane layer member and the metal face portion can be preferably used. Examples of the adhesive include adhesives with product names "Chemlok 218E", "Chemlok 210" and "Chemlok IMB1040" ("Chemlok" is a registered trademark) manufactured by Lord Japan, Inc. Other examples of the adhesive include adhesives with product names "METALOC C-12" and "METALOC UA" ("METALOC" is a registered trademark) manufactured by Toyokagaku kenkyusho co., ltd. Still other examples of the adhesive include a two-component epoxy adhesive. Examples of the two-component epoxy adhesive include adhesives with product names "DP420" and "DP460" put on the market by 3M Japan limited.

The method for forming the urethane layer member is not limited. For example, the urethane layer member may be separately formed from the head body, and then attached to the head body. For example, the urethane layer member may be formed on the head body in a mold. The urethane layer member may be a coating film. The urethane layer member can be formed on the head body as follows, for example.

(1) Preparing a urethane layer member formed separately from a head body; and then sticking the urethane layer member on the surface of the head body with an adhesive.

(2) Preparing a tentative urethane layer member formed separately from a head body; applying a primer on a part of the metal face portion on which the urethane layer member is to be placed; placing the tentative urethane layer member on the primer of the metal face portion and setting them into a mold; and forming a urethane layer member by heating and melting the tentative urethane layer member in the mold.

(3) Putting unreacted urethane raw materials into a mold in which a metal face portion has already been set and causing reaction to form a urethane layer member on the metal face portion.

(4) Subjecting a thermoplastic polyurethane to injection molding (insert molding) in a mold in which a metal face portion has already been set to form a urethane layer member on the metal face portion.

A method for roughening the outer surface of the metal face portion is not limited. The outer surface of the metal face portion may be roughened by using a mold, or by surface processing. Examples of the method of surface processing include blast processing such as shotblasting and sandblasting, metal etching processing, CNC processing, laser processing, and any combination of these processings. CNC stands for Computerized Numerical Control.

A double-pointed arrow t in FIG. 7, FIG. 16, FIG. 25, and FIG. 27A shows the thickness of the urethane layer member. From the viewpoint of the ball sticking feeling, the thickness t of the striking face constituting part of the urethane layer member is preferably greater than or equal to 0.3 mm, more preferably greater than or equal to 0.32 mm, and still more preferably greater than or equal to 0.35 mm. An excessively large thickness t makes it difficult for the protrusions and recesses of the metal face portion to influence a golf ball, which can reduce the ball sticking feeling. From this viewpoint, the thickness t of the striking face constituting part of the urethane layer member is preferably less than or equal to 0.8 mm, more preferably less than or equal to 0.7 mm, and still more preferably less than or equal to 0.6 mm. Also from the viewpoint of the rebound performance of the head, the thickness t is preferably small. Note that the thickness t of the striking face constituting part of the urethane layer member is measured at a position at which no urethane groove g7 is present (see FIG. 27A). In addition, the thickness t of the striking face constituting part of the urethane layer member is measured at a position at which no inner surface protrusion 750 is present.

The urethane layer member is made of a polyurethane. The polyurethane is a polymer having a urethane bond. Examples of the polyurethane include a thermoplastic polyurethane and a thermosetting polyurethane. The thermoplastic polyurethane is a polyurethane that exhibits plasticity by heating. In general, the thermoplastic polyurethane means a polyurethane having a linear chain structure of a high molecular weight to a certain extent. The thermosetting polyurethane is a polyurethane obtained by polymerization through a reaction between a low molecular weight urethane prepolymer and a curing agent (chain extender) when forming the urethane layer member. The thermosetting polyurethane is also referred to as two-component curing type polyurethane. Examples of the thermosetting polyurethane include a polyurethane having a linear chain structure and a polyurethane having a three-dimensional crosslinked structure, which can be obtained by controlling the number of the functional group of the prepolymer or curing agent (chain extender). The polyurethane may be a thermoplastic elastomer.

The thermoplastic polyurethane is not limited, as long as the thermoplastic polyurethane has a plurality of polyurethane bonds within a molecule and exhibits thermo-plasticity. For example, the thermoplastic polyurethane includes a reaction product having a urethane bond formed in a molecule by reacting a polyisocyanate with a polyol, and further with a polyamine as necessary.

The polyisocyanate component constituting the thermoplastic polyurethane is not particularly limited, as long as the polyisocyanate component has two or more isocyanate groups. Examples of the polyisocyanate component include an aromatic polyisocyanate such as 2,4-toluene diisocyanate, 2,6-toluene diisocyanate, a mixture of 2,4-toluene diisocyanate and 2,6-toluene diisocyanate (TDI), 4,4'-diphenylmethane diisocyanate (MDI), 1,5-naphthylene diisocyanate (NDI), 3,3'-bitolylene-4,4'-diisocyanate (TODI), xylylene diisocyanate (XDI), tetramethylxylylene diisocyanate (TMXDI), para-phenylene diisocyanate (PPDI); and an alicyclic polyisocyanate or aliphatic polyisocyanate such as 4,4'-dicyclohexylmethane diisocyanate ($H_{12}$MDI), hydrogenated xylylene diisocyanate ($H_6$XDI), hexamethylene diisocyanate (HDI), isophorone diisocyanate (IPDI), and norbornene diisocyanate (NBDI). The above polyisocyanate components may be used solely or as a mixture of two or more of them.

From the viewpoint of enhancing abrasion resistance, the polyisocyanate component of the polyurethane is preferably the aromatic polyisocyanate. When the aromatic polyisocyanate is used, the resultant polyurethane has enhanced mechanical properties, and thus the obtained urethane layer member has excellent abrasion resistance. Further, from the viewpoint of enhancing weather resistance, the polyisocyanate component of the polyurethane is preferably a non-yellowing polyisocyanate (such as TMXDI, XDI, HDI, $H_6$XDI, IPDI, $H_{12}$MDI, and NBDI), and more preferably 4,4'-dicyclohexylmethane diisocyanate ($H_{12}$MDI). Since 4,4'-dicyclohexylmethane diisocyanate ($H_{12}$MDI) has a rigid structure, the resultant polyurethane has enhanced mechanical properties, and the obtained urethane layer member has excellent abrasion resistance. From the viewpoint of improving the ball sticking feeling, another polyisocyanate component may be selected.

The polyol component constituting the thermoplastic polyurethane is not particularly limited as long as the polyol component has a plurality of hydroxyl groups. Examples of the polyol component include a low molecular weight polyol and a high molecular weight polyol. Examples of the low molecular weight polyol include a diol such as ethylene glycol, diethylene glycol, triethylene glycol, 1,3-butanediol, 1,4-butanediol, neopentyl glycol, and 1,6-hexanediol; and a trial such as glycerin, trimethylolpropane, and hexanetriol. Examples of the high molecular weight polyol include a polyether polyol such as polyoxyethylene glycol (PEG), polyoxypropylene glycol (PPG), and polyoxytetramethylene glycol (PTMG); a condensed polyester polyol such as polyethylene adipate (PEA), polybutylene adipate (PBA), and polyhexamethylene adipate (PHMA); a lactone polyester polyol such as poly-$\varepsilon$-caprolactone (PCL); a polycarbonate polyol such as polyhexamethylene carbonate; and an acrylic polyol. The above polyol components may be used solely or as a mixture of two or more of them.

An average molecular weight of the high molecular weight polyol is not particularly limited, and is preferably, for example, greater than or equal to 400, and more preferably greater than or equal to 1000. This is because an excessively small average molecular weight of the high molecular weight polyol makes the resultant polyurethane hard, which can result in deterioration of feeling at impact with a golf ball. An upper limit of the average molecular weight of the high molecular weight polyol is not particularly limited, and it is preferably less than or equal to 10000, and more preferably less than or equal to 8000.

The polyamine which can constitute the thermoplastic polyurethane as necessary is not particularly limited, as long as it has at least two amino groups. Examples of the polyamine include an aliphatic polyamine such as ethylene diamine, propylene diamine, butylene diamine, and hexamethylene diamine; an alicyclic polyamine such as isophorone diamine, and piperazine; and an aromatic polyamine.

The aromatic polyamine is not particularly limited, as long as it has at least two amino groups directly or indirectly bonded to an aromatic ring. Herein, the "indirectly bonded to an aromatic ring" means that the amino groups are bonded to an aromatic ring via, for example, a lower alkylene group. The aromatic polyamine may be, for example, a monocyclic aromatic polyamine having at least two amino groups bonded to one aromatic ring, or a polycyclic aromatic polyamine having at least two aminophenyl groups each having at least one amino group bonded to one aromatic ring.

Examples of the monocyclic aromatic polyamine include: a type wherein amino groups such as phenylenediamine, tolylenediamine, diethyltoluenediamine, and dimethylthiotoluenediamine, are directly bonded to an aromatic ring; and a type wherein amino groups such as xylylenediamine are bonded to an aromatic ring via a lower alkylene group. Further, the polycyclic aromatic polyamine may be either a poly(aminobenzene) having at least two aminophenyl groups directly bonded to each other, or a compound having at least two aminophenyl groups bonded to each other via a lower alkylene group or an alkylene oxide group. Among them, a diaminodiphenylalkane having two aminophenyl groups bonded to each other via a lower alkylene group is preferable, 4,4'-diaminodiphenylmethane and a derivative thereof are particularly preferable.

The configuration of the thermoplastic polyurethane is not particularly limited. Examples of the configuration include: a configuration where the thermoplastic polyurethane is composed of the polyisocyanate component and the high molecular weight polyol component; a configuration where the thermoplastic polyurethane is composed of the polyisocyanate component, the high molecular weight polyol component and the low molecular weight polyol component; a configuration where the thermoplastic polyurethane is composed of the polyisocyanate component, the high molecular weight polyol component, the low molecular weight polyol component and the polyamine component; and a configuration where the thermoplastic polyurethane is composed of the polyisocyanate component, the high molecular weight polyol component and the polyamine component.

Examples of the thermoplastic polyurethane include an MDI-based polyurethane in which MDI is used as the polyisocyanate component, and a hydrogenated MDI-based polyurethane in which $H_{12}MDI$ is used as the polyisocyanate component.

Specific examples of the thermoplastic polyurethane include product names "Elastollan XNY90A", "Elastollan XNY97A", "Elastollan XNY585", "Elastollan 1180A10", "Elastollan 1185A50", "Elastollan 1190A10TR", "Elastollan 1195A50STR" and "Elastollan 1164D50" put on the market by BASF Japan Ltd.

In the present disclosure, the material of the urethane layer member is not specifically limited as long as the material contains a polyurethane as a basis resin component. When the polyurethane is a thermoplastic polyurethane, the content of the thermoplastic polyurethane contained in the resin component constituting the material of the urethane layer member is preferably greater than or equal to 50% by weight, more preferably greater than or equal to 70% by weight, and still more preferably greater than or equal to 90% by weight. In addition, it is also preferable that the resin component constituting the material of the urethane layer member substantially consists only of a polyurethane (for example, only a thermoplastic polyurethane).

In addition to the resin component, the material of the urethane layer member of the present disclosure may further contain, for example, a pigment component such as a white pigment (e.g. titanium oxide), a blue pigment and a red pigment, a weight adjusting agent such as calcium carbonate and barium sulfate, a dispersant, an antioxidant, an ultraviolet absorber, a light stabilizer, a fluorescent material or fluorescent brightener, as long as they do not impair the performance of the urethane layer member.

The Shore D hardness of the striking face is not limited. From the viewpoint of feeling at impact with a golf ball, the Shore D hardness can be set within a predetermined range. The lower limit of the Shore D hardness of the striking face can be greater than or equal to 65, further can be greater than or equal to 70, and still further can be greater than or equal to 75. The upper limit of the Shore D hardness of the striking face can be less than or equal to 99, further can be less than or equal to 95, and still further can be less than or equal to 90.

The Shore D hardness of the striking face is measured in a finished head. After a head is stored at a temperature of 23°C for two weeks, the hardness of the striking face of the head is measured using ASKER Durometer Type D. The measurement is made by pressing the durometer against the striking face of the head. The number n of times of the measurements is 10. The average value of 10 data is considered as a measured value. The Shore D hardness is measured at a position at which the metal grooves or the urethane grooves are not present.

Examples of a preferable material of the head body include metals and fiber reinforced plastics. Examples of the metals include titanium alloys, pure titanium, stainless steel, aluminum alloys, maraging steel, and soft iron. Examples of the fiber reinforced plastics include carbon fiber reinforced plastics. The head body may include a portion made of a metal and a portion made of a fiber reinforced plastic. Examples of the material of the metal face portion include titanium alloys, pure titanium, stainless steel, aluminum alloys, maraging steel, and soft iron.

Examples of a preferable material of the metal face portion include titanium alloys, pure titanium, stainless steel, aluminum alloys, maraging steel, and soft iron.

Examples

[Example 1]

A head having the same configuration as the head 300 of the third embodiment was produced. A face member 300b was produced by forging. A back member 300c was produced by lost-wax precision casting. The face member 300b was welded to the back member 300c to obtain a head body 300a. The material of the face member 300b was "Super-TIX 51AF". The material of the back member 300c was "Ti-811Plus". Of the face member 300b, the outer surface of the metal face portion M3 was subjected to surface processing using laser, to increase its surface roughness. A urethane layer member U3 was formed separately from the head body 300a. The urethane layer member U3 was produced by injection molding with a thermoplastic polyurethane. The thermoplastic polyurethane used as the material of the urethane layer member U3 was an MDI-based polyurethane (product name "Elastollan 1185A50" available from BASF Japan Ltd). The urethane layer member U3 was bonded to the face member 300b. The product name "Chemlok 210" manufactured by Lord Japan, Inc. was used as the adhesive. The edge portion 330 of the urethane layer member U3 was inserted into the groove 328 and was bonded to the groove 328. Thus, a golf club head of Example 1 was obtained. A shaft and a grip were combined with the head to obtain a golf club (having a club length of 45.5 inches) of Example 1.

[Examples 2 to 10]

Golf club heads and golf clubs of Examples 2 to 10 were obtained in the same manner as in Example 1 except that specifications shown in below Table 1 and Table 2 were adopted. However, the metal grooves shown in FIG. 26A were added in Example 5. In Example 5, the width of the metal grooves was 0.15 mm, and the depth of the metal grooves was 0.15 mm. In Example 6, the embodiment shown in FIG. 27A was incorporated. That is, the head of Example 6 included the metal grooves, the inner surface protrusions and the urethane grooves. The width of the metal grooves and the width of the inner surface protrusions was 0.15 mm. The depth of the metal grooves and the height of the inner surface protrusions was 0.15 mm.

[Comparative Examples 1 to 4]

Golf club heads and golf clubs of Comparative Examples 1 to 4 were obtained in the same manner as in Example 1 except that specifications shown in below Table 1 and Table 2 were adopted. In Comparative Example 4 in which the thickness t was 0 mm, no urethane layer member was provided, and the outer surface of the metal face portion was the striking face of the head. The surface roughness of the striking face of Comparative Example 4 was a normal surface roughness which was usually adopted in a striking face made of a metal.

Evaluations were made as follows.

[Arithmetic mean roughness Ra, Maximum peak-to-valley height Rz, and Developed interfacial area ratio Sdr]

The arithmetic mean roughness Ra, the maximum peak-to-valley height Rz, and the developed interfacial area ratio Sdr were measured in the above-described methods. The measured values are shown in below Table 1 and Table 2.

[Thickness t of the urethane layer member]

The thickness t of the striking face constituting part of the urethane layer member was measured. The measured value of each head is shown in below Table 1 and Table 2.

[Ball sticking feeling]

Ten golfers who have a handicap of less than or equal to 10 and who swing a driver at a head speed of 45 to 50 m/s each hit a golf ball using each of the clubs to evaluate the ball sticking feeling on a scale of one to five. The higher the score is, the higher the evaluation is. As the golf ball, the product name "SRIXON Z-STAR XV" manufactured by Sumitomo Rubber Industries, Ltd. was used. The average values of the ten golfers for respective clubs are shown as "ball sticking feeling" in below Table 1 and Table 2.

[Flight distance]

The ten golfers each hit a golf ball five times using each of the clubs to measure a flight distance for each shot. A total flight distance that includes a distance by which the hit ball runs on the ground was measured. As the golf ball, the product name "SRIXON Z-STAR XV" manufactured by Sumitomo Rubber Industries, Ltd. was used. The average values of flight distances in all shots for respective clubs are shown in below Table 1 and Table 2.

[COR]

COR was measured at the face center Fc of each head. COR means Coefficient of Restitution. COR was measured in accordance with "Interim Procedure for Measuring the Coefficient of Restitution of an Iron Clubhead Relative to a Baseline Plate Revision 1.3 January 1, 2006" specified by the USGA (United States Golf Association). The measured value for each head is shown in below Table 1 and Table 2.

[Table 1]

| Table 1 Specifications and evaluation results of Examples and Comparative Examples | | | | | | | | | | |
|---|---|---|---|---|---|---|---|---|---|---|
| | Unit | Ex. 1 | Ex. 2 | Ex. 3 | Ex. 4 | Ex. 5 | Ex. 6 | Comp. Ex. 1 | Comp. Ex. 2 | Comp. Ex. 3 |
| Arithmetic mean roughness Ra | μm | 4.6 | 6.5 | 7.6 | 15.0 | 4.6 | 4.6 | 3.5 | 4.2 | 4.0 |
| Maximum peak-to-valley height Rz | μm | 27.0 | 26.0 | 40.0 | 80.0 | 27.0 | 27.0 | 16.0 | 21.0 | 19.0 |
| Developed interfacial area ratio Sdr | -- | 0.13 | 0.14 | 0.21 | 0.45 | 0.13 | 0.13 | 0.07 | 0.11 | 0.10 |
| Thickness t of the striking face constituting part of the urethane layer member | mm | 0.3 | 0.3 | 0.3 | 0.3 | 0.3 | 0.3 | 0.3 | 0.3 | 0.3 |
| Ball sticking feeling | score | 3.7 | 3.8 | 4.0 | 4.3 | 3.8 | 4.6 | 3.2 | 3.3 | 3.3 |
| Flight distance | yards | 266.0 | 266.0 | 266.0 | 267.0 | 266.0 | 267.0 | 266.0 | 266.0 | 266.0 |
| COR | -- | 0.843 | 0.843 | 0.843 | 0.843 | 0.843 | 0.843 | 0.843 | 0.843 | 0.843 |

[Table 2]

| | Unit | Ex. 7 | Ex. 1 | Ex. 8 | Ex. 9 | Ex. 10 | Comp. Ex. 4 |
|---|---|---|---|---|---|---|---|
| Arithmetic mean roughness Ra | μm | 4.6 | 4.6 | 4.6 | 4.6 | 4.6 | 3.0 |

(continued)

|  | Unit | Ex. 7 | Ex. 1 | Ex. 8 | Ex. 9 | Ex. 10 | Comp. Ex. 4 |
|---|---|---|---|---|---|---|---|
| Maximum peak-to-valley height Rz | μm | 27.0 | 27.0 | 27.0 | 27.0 | 27.0 | 20.0 |
| Developed interfacial area ratio Sdr | -- | 0.13 | 0.13 | 0.13 | 0.13 | 0.13 | 0.006 |
| Thickness t of the striking face constituting part of the urethane layer member | mm | 0.2 | 0.3 | 0.6 | 0.8 | 1.0 | 0.0 |
| Ball sticking feeling | score | 2.4 | 3.7 | 3.9 | 4.1 | 4.2 | 2.0 |
| Flight distance | yards | 266.0 | 266.0 | 265.8 | 265.5 | 265.0 | 268.0 |
| COR |  | 0.844 | 0.843 | 0.843 | 0.842 | 0.841 | 0.844 |

After the evaluations were finished, the urethane layer members of all of Examples and Comparative Examples were observed. In Comparative Examples 1 to 3, a part of the urethane layer member peeled off from the metal face portion. On the other hand, in Examples 1 to 10, the urethane layer member did not peel off, and adhesion between the urethane layer member and the metal face portion was kept.

As shown in Table 1 and Table 2, Examples are highly evaluated as compared with Comparative Examples.

The following clauses are a part of invention included in the present disclosure.

[Clause 1]
A golf club head including a face portion including a striking face, wherein

the face portion includes a metal face portion made of a metal, and a urethane layer member disposed outside the metal face portion and made of a polyurethane, and
a covered part, which is covered by the urethane layer member, of an outer surface of the metal face portion has a surface roughness of greater than 4.5 um when expressed by an arithmetic mean roughness Ra or has a surface roughness of greater than 25 um when expressed by a maximum peak-to-valley height Rz.

[Clause 2]
The golf club head according to clause 1, wherein the covered part, which is covered by the urethane layer member, of the outer surface of the metal face portion has a developed interfacial area ratio Sdr of greater than or equal to 0.12.

[Clause 3]
The golf club head according to clause 1 or 2, wherein the urethane layer member includes a striking face constituting part having a thickness of greater than or equal to 0.3 mm and less than or equal to 0.8 mm.

[Clause 4]
The golf club head according to any one of clauses 1 to 3, wherein the covered part, which is covered by the urethane layer member, of the outer surface of the metal face portion further includes at least one groove which is referred to as a metal groove.

[Clause 5]
The golf club head according to clause 4, wherein

an outer surface of the urethane layer member includes at least one groove which is referred to as a urethane groove, and
the urethane groove is disposed so as not to overlap the metal groove.

[Clause 6]
The golf club head according to clause 4 or 5, wherein an inner surface of the urethane layer member includes an inner surface protrusion that is inserted into the metal groove.

[Clause 7]
The golf club head according to any one of clauses 4 to 6, wherein

the at least one metal groove includes a plurality of metal grooves, and
the metal grooves include the metal grooves having depths different from each other.

[Clause 8]
The golf club head according to any one of clauses 1 to 7, wherein

the golf club head includes a head body including the metal face portion, and the urethane layer member,
a flat plane that is in contact with the striking face at a face center is defined as a reference plane,
in each vertical cross section, contact points between the golf club head outer surface and straight lines having an angle of 45 degrees with respect to the reference plane are determined,
a set of the contact points is defined as a 45-degree boundary line,
the urethane layer member extends to a back side of the 45-degree boundary line, and
the head body includes an edge fixing portion that fixes an edge portion of the urethane layer member on the back side of the 45-degree boundary line.

[Clause 9]
The golf club head according to clause 8, wherein

the edge fixing portion is a groove, and
the edge portion of the urethane layer member is inserted into the groove.

List of Reference Symbols

100, 200, 300, 400, 500, 600, 700, 800 Golf club head
100a, 200a, 300a, 400a, 500a, 600a, 700a, 800a
Head body
102, 202, 302 Face portion
102a, 202a, 302a Striking face
102b, 202b, 302b Face inner surface
104, 204, 304 Crown portion
106, 206, 306 Sole portion
108, 208, 308 Hosel portion
120, 220, 320, 420, 520, 620, 720, 820 Outer surface of the metal face portion
124, 224, 324, 724 Inner surface of the urethane layer member
126, 226, 326 Outer surface of the urethane layer member
130 Recess in which the urethane layer member is disposed
232 Edge portion of the urethane layer member
234 Edge fixing portion
328 Groove
330 Edge portion of the urethane layer member
334 Edge fixing portion
750 Inner surface protrusion
s4, s5, s6, s7, s8 Metal groove
g7 Urethane groove
k1 Contour line of the urethane layer member
k2, k3 Boundary between the urethane layer member and the head body
Fc Face center
U1, U2, U3, U7 Urethane layer member
M1, M2, M3, M4, M5, M6, M7, M8 Metal face portion

The above descriptions are merely illustrative and various modifications can be made without departing from the principles of the present disclosure.
The terminology used in the description of the various described embodiments herein is for the purpose of describing particular embodiments only and is not intended to be limiting. The use of the terms "a", "an", "the", and similar referents in the context of throughout this disclosure (especially in the context of the following claims) are to be construed to cover both the singular and the plural, unless otherwise indicated herein or clearly contradicted by context. As used throughout this disclosure, the word "may" is used in a permissive sense (i.e., meaning "having the potential to"), rather than the mandatory sense (i.e., meaning "must"). Similarly, as used throughout this disclosure, the terms "comprising," "having," "including," and "containing" are to be construed as open-ended terms (i.e., meaning "including, but not limited to,") unless otherwise noted.

**Claims**

1. A golf club head comprising a face portion including a striking face, wherein

    the face portion includes a metal face portion made of a metal, and a urethane layer member disposed outside the metal face portion and made of a polyurethane, and
    a covered part, which is covered by the urethane layer member, of an outer surface of the metal face portion has a surface roughness of greater than 4.5 um when expressed by an arithmetic mean roughness Ra or has a surface roughness of greater than 25 um when expressed by a maximum peak-to-valley height Rz.

2. The golf club head according to claim 1, wherein the covered part, which is covered by the urethane layer member, of the outer surface of the metal face portion has a developed interfacial area ratio Sdr of greater than or equal to 0.12.

3. The golf club head according to claim 1 or 2, wherein the urethane layer member includes a striking face constituting part having a thickness of greater than or equal to 0.3 mm and less than or equal to 0.8 mm.

4. The golf club head according to claim 1 to 3, wherein the covered part, which is covered by the urethane layer member, of the outer surface of the metal face portion further includes at least one groove which is referred to as a metal groove.

5. The golf club head according to claim 4, wherein

    an outer surface of the urethane layer member includes at least one groove which is referred to as a urethane groove, and
    the urethane groove is disposed so as not to overlap the metal groove.

6. The golf club head according to claim 4 or 5, wherein an inner surface of the urethane layer member includes an inner surface protrusion that is inserted into the metal groove.

7. The golf club head according to claim 4 to 6, wherein

    the at least one metal groove comprises a plurality of metal grooves, and
    the metal grooves include the metal grooves having depths different from each other.

8. The golf club head according to claim 1 to 7, wherein

    the golf club head includes a head body including the metal face portion, and the urethane layer member,
    a flat plane that is in contact with the striking face at a face center is defined as a reference plane,
    in each vertical cross section, contact points between the golf club head outer surface and straight lines having an angle of 45 degrees with respect to the reference plane are determined,
    a set of the contact points is defined as a 45-degree boundary line,
    the urethane layer member extends to a back side of the 45-degree boundary line, and
    the head body includes an edge fixing portion that fixes an edge portion of the urethane layer member on the back side of the 45-degree boundary line.

9. The golf club head according to claim 8, wherein

    the edge fixing portion is a groove, and
    the edge portion of the urethane layer member is inserted into the groove.

10. The golf club head according to claim 1 to 7, wherein
    an entirety of the urethane layer member is disposed within the striking face.

11. The golf club head according to claim 1 to 7, wherein

    a flat plane that is in contact with the striking face at a face center is defined as a reference plane,
    in each vertical cross section, contact points between the golf club head outer surface and straight lines having an angle of 45 degrees with respect to the reference plane are determined,
    a set of the contact points is defined as a 45-degree boundary line, and

an end of the urethane layer member is located at a position on a face side relative to the 45-degree boundary line.

100 (100a)

104

U1

102

102a

110

108a

108

FIG. 1

100 (100a)

106

108

FIG. 2

# FIG. 3A

100 (100a)

104

126

E3  E2

← A

E1

102c

108a

108

102c

130a (k1)

U1

Fc

102
(102a)

102c

← A

# FIG. 3B

Q1

r=200mm

102a

Q1

r=200mm

Cross section E1

100
(100a)

104

102c

108

106

130a
(k1)

U1

102c

102
(102a)

FIG. 4

FIG. 5

FIG. 6

FIG. 7

FIG. 8

200 (200a)

206

U2

k2

FIG. 9

208

FIG. 10

FIG. 11

FIG. 12

FIG. 13

FIG. 14

FIG. 15

FIG. 16

300 (300a)

k3

304

U3

302

302a

308a

328

308

310

FIG. 17

FIG. 18

FIG. 19

FIG. 20

300
(300a)

304

k3

308

306

k3

U3

302
(302a)

326

# FIG. 21

FIG. 22

FIG. 23

FIG. 24

FIG. 25

FIG. 26A

400a (400)
440
M4 (420, 446)
442
444
s4 s4 s4 s4

FIG. 26B

500a (500)
540 s5 550
M5 (520, 546)
542
544
s5 s5 s5
552

FIG. 26C

600a (600)
640
M6 (620, 646)
642
644
s6 s6
s6

FIG. 26D

700a (700)
M7 (720, 746)
s7
s7

FIG. 26E

800a (800)
M8 (820, 846)
s8 s8 s8
s8

FIG. 27A

U7  702a (726)  g7  t  g7  g7  g7  720

M7  750  s7  750  s7  750  s7  750  s7  700a
724

FIG. 27B

Fc

U7  702a (726)  g7  g7  g7  g7  720

M7  750  s7  750  s7  750  s7  750  s7  700a
724

FIG. 27C

Fc

U7  702a (726)  g7  g7  g7  g7  720

M7  750  s7  750  s7  s7  750  s7  700a
724

750

FIG. 28

Europäisches Patentamt

European Patent Office

Office européen des brevets

# EUROPEAN SEARCH REPORT

**Application Number**

EP 24 21 2006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 906 515 B2 (TOMANTSCHGER KLAUS [CA]; MCCREA JONATHAN [CA] ET AL.) 9 December 2014 (2014-12-09) * the whole document * * claims 5,13 * * paragraph [0037] - paragraph [0039] * * paragraph [0132] * * paragraph [0208] - paragraph [0209] * | 1-4,6-11 | INV. A63B53/04 A63B60/00 B32B27/40 B32B37/00 C23C18/16 C25D7/00 |
| Y,D | US 6 428 427 B1 (KOSMATKA JOHN B [US]) 6 August 2002 (2002-08-06) * the whole document * | 1-4,6-11 | |
| Y | JP 2001 170226 A (SUMITOMO RUBBER IND) 26 June 2001 (2001-06-26) * the whole document * * claim 1 * * paragraph [0004] - paragraph [0005] * * paragraph [0013] * | 1-4,6-11 | |
| | | | **TECHNICAL FIELDS SEARCHED (IPC)** B32B C23C A63B C25D |

The present search report has been drawn up for all claims

| Place of search | Date of completion of the search | Examiner |
|---|---|---|
| Munich | 26 March 2025 | Tejada Biarge, Diego |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                       
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 21 2006

This annex lists the patent family members relating to the patent documents cited in  the above-mentioned European search report.
The members are as contained in the European Patent Office EDP file on
The European Patent Office is in no way liable for these particulars which are merely given for the purpose of information.

26-03-2025

| Patent document cited in search report | | Publication date | Patent family member(s) | | Publication date |
|---|---|---|---|---|---|
| US 8906515 | B2 | 09-12-2014 | BR | PI1010030 A2 | 24-09-2019 |
| | | | CA | 2763983 A1 | 09-12-2010 |
| | | | CN | 102574362 A | 11-07-2012 |
| | | | EP | 2437935 A1 | 11-04-2012 |
| | | | KR | 20120047873 A | 14-05-2012 |
| | | | US | 2010304065 A1 | 02-12-2010 |
| | | | US | 2015111673 A1 | 23-04-2015 |
| | | | WO | 2010139053 A1 | 09-12-2010 |
| US 6428427 | B1 | 06-08-2002 | AU | 9118601 A | 15-04-2002 |
| | | | CN | 1468125 A | 14-01-2004 |
| | | | GB | 2380686 A | 16-04-2003 |
| | | | JP | 4733336 B2 | 27-07-2011 |
| | | | JP | 2004510509 A | 08-04-2004 |
| | | | US | 6428427 B1 | 06-08-2002 |
| | | | US | 2002187852 A1 | 12-12-2002 |
| | | | WO | 0228490 A1 | 11-04-2002 |
| JP 2001170226 | A | 26-06-2001 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2023200259 A
- JP 4733336 B

- US 6428427 B1

**Non-patent literature cited in the description**

- Interim Procedure for Measuring the Coefficient of Restitution of an Iron Clubhead Relative to a Baseline Plate Revision 1.3. United States Golf Association, 01 January 2006